(19) 

**Europäisches Patentamt**
**European Patent Office**
**Office européen des brevets**

(11) **EP 4 737 605 A1**

(12) **EUROPEAN PATENT APPLICATION**
published in accordance with Art. 153(4) EPC

(43) Date of publication:
06.05.2026 Bulletin 2026/19

(51) International Patent Classification (IPC):
*C22C 38/00* (2006.01)   *C21D 8/12* (2026.01)
*C22C 38/60* (2006.01)   *H01F 1/147* (2006.01)

(21) Application number: 24832025.1

(22) Date of filing: 27.06.2024

(52) Cooperative Patent Classification (CPC):
C21D 8/12; C22C 38/00; C22C 38/60; H01F 1/147

(86) International application number:
PCT/JP2024/023281

(87) International publication number:
WO 2025/005166 (02.01.2025 Gazette 2025/01)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 29.06.2023 JP 2023106556

(71) Applicant: **Nippon Steel Corporation**
**Tokyo 100-8071 (JP)**

(72) Inventors:
• **NAKAMURA, Shuichi**
**Tokyo 100-8071 (JP)**
• **TAKAHASHI, Fumiaki**
**Tokyo 100-8071 (JP)**
• **ARAI, Satoshi**
**Tokyo 100-8071 (JP)**
• **MIZOKAMI, Masato**
**Tokyo 100-8071 (JP)**

(74) Representative: **Vossius & Partner**
**Patentanwälte Rechtsanwälte mbB**
**Siebertstraße 3**
**81675 München (DE)**

(54) **GRAIN-ORIENTED ELECTRICAL STEEL SHEET**

(57)    In a grain oriented electrical steel sheet, $ave\phi_L$ which is an average of the angular deviation $\phi$ obtained from at least 1000 measurement points with spacing of 1 mm in the rolling direction L is 4.0° or less, and $D_L10$ which is a grain size at 10% by number base from largest in a case where the grain sizes $D_L$ obtained in the rolling direction L are sorted from largest to smallest is $(100 - 15 \times ave\phi L)$ or less in units of mm.

FIG. 2

EP 4 737 605 A1

**Description**

TECHNICAL FIELD

The present invention relates to a grain oriented electrical steel sheet.

Priority is claimed on Japanese Patent Application No. 2023-106556, filed June 29, 2023, the content of which is incorporated herein by reference.

BACKGROUND ART

A grain oriented electrical steel sheet includes Si, the crystal orientation of the grains thereof closely aligns in the Goss orientation (cubic crystal {110}<001>), and the <001> orientation, which is a magnetization easy axis, is substantially aligned in the rolling direction in the steel sheet manufacturing process. Such a grain oriented electrical steel sheet is very desirable as a material for an iron core and the like of a transformer. Among the magnetic characteristics of the grain oriented electrical steel sheet, magnetic flux density and iron loss are particularly important.

The magnetic flux density of the grain oriented electrical steel sheet when a predetermined magnetizing force is applied tends to increase as the degree to which the magnetization easy axes of the grains are aligned in the rolling direction of the steel sheet, that is, the orientation of the grains is higher. A magnetic flux density $B_8$ is generally used as an index representing the magnetic flux density. The magnetic flux density $B_8$ is a value of the magnetic flux density of the grain oriented electrical steel sheet excited at a magnetizing force of 800 A/m in the rolling direction. That is, the grain oriented electrical steel sheet having a larger value of the magnetic flux density $B_8$ is more easily magnetized with a certain magnetizing force, the magnetic flux density becomes high, and thus it is suitable for a small-sized and highly efficient transformer.

In addition, an iron loss $W_{17/50}$ is generally used as an index representing the iron loss. The iron loss $W_{17/50}$ is an iron loss when the grain oriented electrical steel sheet is excited by alternating current so as to be a maximum magnetic flux density of 1.7 T under the condition of a frequency of 50 Hz. The grain oriented electrical steel sheet having a smaller value of the iron loss $W_{17/50}$ has a lower energy loss and is suitable for a transformer.

The methods for reducing the iron loss include a method of increasing the electric resistance by containing Si, a method of reducing the thickness of the steel sheet, and a method of decreasing the grain size, which are effective for reducing the eddy-current loss, and a method of aligning the orientation of the grains which is effective for reducing the hysteresis loss. That is, when the value of the magnetic flux density $B_8$ becomes higher, the crystal orientation is aligned with the Goss orientation, and the hysteresis loss is reduced. Thus, when the value of the magnetic flux density $B_8$ becomes higher, the value of the iron loss $W_{17/50}$ tends to be lower. On the other hand, when the growth of Goss-oriented grains is promoted in order to improve the alignment degree of the crystal orientation, the grain size tends to coarsen, and the eddy-current loss increases. Thus, when the grains are excessively coarse even when the value of $B_8$ is high, the iron loss tends to deteriorate. As explained above, there is an antinomy.

In recent years, in order to purposely refine a width of magnetic domain, a method of controlling the magnetic domain by applying strain by irradiation with laser beam, plasma jet, and the like, or by forming grooves by mechanical processing, etching, and the like has been developed. By using such a method, in the steel sheet in which the alignment degree of the crystal orientation is increased and the magnetic flux density is increased, the eddy-current loss can be reduced, and the iron loss can be sufficiently reduced even when the secondary recrystallized grain size coarsens. However, when the strain is applied into the steel sheet, magnetostriction ($\lambda_{P-P}$) increases due to the strain. In addition, when heat treatment is performed at a temperature of approximately 800°C after the magnetic domain refinement, the effect of reducing the iron loss disappears, and therefore the above steel sheet cannot be used for utilization requiring strain relief annealing at 800°C or higher after irradiation. On the other hand, in the magnetic domain refinement using the grooves, there is a problem in that the magnetic flux density $B_8$ decreases.

In general, the grain oriented electrical steel sheet is manufactured as described below. A steel sheet material (slab) including a predetermined amount of Si is subjected to hot rolling, annealing, and cold rolling to obtain a steel sheet having a desired thickness. Then, the steel sheet after cold rolling is annealed (this is also referred to as primary annealing or decarburization annealing). By this annealing, primary recrystallization occurs, and grains having a crystal orientation in which the magnetization easy axes are aligned in the rolling direction and a deviation angle from an ideal Goss orientation expressed by { 110}<001> is 10° or less (hereinafter, referred to as Goss-oriented grains) are formed in the primary recrystallized grains. This annealing is also performed as decarburization annealing. Thereafter, an annealing separator including MgO as a main component is applied to the surface of the steel sheet in which primary recrystallization has occurred. Subsequently, the steel sheet to which the annealing separator has been applied is coiled to prepare a steel sheet coil, and this steel sheet coil is subjected to batch treatment annealing (also referred to as secondary recrystallization annealing or final annealing). By this annealing, the Goss-oriented grains encroach on other grains, secondary recrystallization occurs, and a so-called glass film is formed on the surface of the steel sheet. At the time of secondary recrystallization, due to the effect of an inhibitor included in the steel sheet, the Goss-oriented grains preferentially grow, and the grain size may be 100 mm or more in coarse grains. Next, uncoiling the steel sheet coil, annealing for flattening the steel sheet in which the secondary recrystallization has occurred, forming an insulating coating, and the like are performed.

As described above, the grain oriented electrical steel sheet obtains the desired magnetic properties by inducing to the secondary recrystallization during final annealing to obtain a crystal structure including Goss-oriented grains aligned in the {110}<001> orientation. In order to obtain this crystal structure, it is effective to increase an existence frequency of Goss-oriented grains which are minor or increase the existence frequency of grains having higher lattice matching with the Goss-oriented grains by the primary annealing. For instance, grains of the {778} <447> ($\approx$ {111}<112>) orientation and the {411}<148> orientation which have higher lattice matching with the {110}<001> orientation and a $\Sigma$9 coincidence site lattice relationship with a Goss orientation (referred to as CSL oriented grains) are the grains easily encroached by Goss-oriented grains, and thus, it is effective to include a large amount of the above grains in the primary recrystallized structure. However, when the crystal orientation of the grains formed by the primary annealing is controlled, it is difficult to simultaneously improve the existence frequency of the Goss-oriented grains and the existence frequency of the grains having the coincidence site lattice relationship. For instance, in a case where the cold rolling reduction is 85% or more, the existence frequency of the CSL oriented grains which are easily encroached by the Goss-oriented grains increases as the cold rolling reduction increases, whereas the existence frequency of the Goss-oriented grains decreases as the cold rolling reduction increases. In addition, the existence frequency of the Goss-oriented grains which are minor in the primary recrystallization texture increases as the heating rate of the primary annealing increases, whereas the existence frequency of the CSL oriented grains having the {111}<112> orientation which are major in the primary recrystallization texture conversely decreases as the heating rate of the primary annealing increases.

That is, under conventional process control conditions, the existence frequency of the Goss-oriented grains and the existence frequency of the CSL oriented grains that are easily encroached by the Goss-oriented grains cannot be controlled independently.

Here, in regard to the crystal orientation which is identified in the grain oriented electrical steel sheet, a deviation angle from the ideal {110}<001> orientation around the normal direction Z (ND) is referred to as a deviation angle $\alpha$, a deviation angle from the ideal {110}<001> orientation around the transverse direction C (TD) is referred to as a deviation angle $\beta$, and a deviation angle from the ideal {110}<001> orientation around the rolling direction L (RD) is referred to as a deviation angle $\gamma$. Then, an angular deviation $\theta$ is defined as the angular deviation from the ideal {110}<001> orientation obtained by the following (Formula A) using the deviation angles $\alpha$, $\beta$, and y around the ND, TD, and RD of the crystal orientation identified in the grain oriented electrical steel sheet.

$$\theta = (\alpha^2 + \beta^2 + \gamma^2)^{1/2} \qquad \text{(Formula A)}$$

As described above, the Goss-oriented grains are not grains having a Goss orientation (ideal Goss orientation) (referred to as ideal Goss-oriented grains) in a strict sense. A direction of the magnetization easy axis (cubic crystal {110} <001>) of each grain and the rolling direction do not always completely coincide with each other, and the angular deviation $\theta$ exists between the direction of the magnetization easy axis and the rolling direction. On the basis of (Formula A), a grain in which the angular deviation $\theta$ from the ideal Goss orientation is 10° or less is referred to as the Goss-oriented grain (practical Goss-oriented grain). When the angular deviation $\theta$ of the practical Goss-oriented grain increases, the orientation of the grains decreases, and the magnetic flux density $B_8$ decreases.

In general, grains having large angular deviation $\theta$ are also mixed in the Goss-oriented grains included in the steel sheet after primary recrystallization. However, when grains grow by secondary recrystallization, except for the effect of size advantage of grain at an initial stage of secondary recrystallization, the grains having small angular deviation $\theta$ among the Goss-oriented grains have a larger driving force of grain growth and continue to grow preferentially until the secondary recrystallization is completed. Therefore, when the angular deviation $\theta$ of the Goss-oriented grains is smaller, the grain size after secondary recrystallization tends to be larger. That is, in a manufacturing method in which secondary recrystallized grains are highly made to align in the Goss orientation, specific grains are preferentially grown, and thus, the grains size necessarily tends to coarsen.

In addition, at the time of secondary recrystallization, the steel sheet is not flat but curved since it is coiled in a coil shape, but the grains grow while maintaining the linearity of the crystal orientation. Therefore, when the coiled steel sheet is uncoiled and made to be flat after secondary recrystallization, a region in which the direction of the magnetization easy axis is not parallel to the surface of the grain oriented electrical steel sheet arises in the grains. Due to uncoiling explained above, the value of the deviation angle $\beta$ mainly increases, and the angular deviation $\theta$ also increases. The increase in the angular deviation $\theta$ due to uncoiling becomes excessive as the grain size increases. That is, the Goss-oriented grains having small angular deviation $\theta$ tend to preferentially grow during secondary recrystallization, but when the secondary recrystallized grain size is coarse, the angular deviation $\theta$ increases due to uncoiling.

Patent Document 1 discloses a technique in which linear grooves satisfying a predetermined condition are formed by performing an etching treatment on the surface of steel sheet after final cold rolling, and a heating rate in a temperature range where a steel sheet temperature is 500°C or more and 750°C or less is increased in a region of the linear grooves as compared with a region other than the linear grooves by subsequent primary annealing. **In** Patent Document **1,** by purposely separating a region where the heating rate is high and a region where the heating rate is low, a region (region of the linear grooves) where the existence frequency of (110)[001] oriented grains is increased and a region (region other than the linear grooves) where the existence frequency of (111)[112] oriented grains is increased are purposely arranged.

Patent Document 2 discloses a technique of irradiating the surface of a silicon steel sheet with a laser beam plural times at predetermined spacing PL in a rolling direction between cold rolling and final annealing. When the silicon steel sheet is made to be secondary recrystallized by final annealing, a trace line along the laser beam becomes a grain boundary which reaches from one surface to the other surface of the silicon steel sheet. **In** Patent Document 2, after the final annealing, the length of the grains in the rolling direction is maximally 30 mm which corresponds to the spacing PL of the irradiation, and the angular deviation $\beta$ between the direction of the magnetization easy axis (cubic crystal {110}<001>) and the rolling direction is in the range of 0° to 6°.

Patent Document 3 discloses a method for manufacturing a grain oriented electrical steel sheet that has a small difference in alignment degree to a Goss orientation in the inner and outer circumferences of coils having different curvatures and has a high magnetic flux density on the premise of a high temperature slab heating process. In Patent Document 3, by performing linear local heating on a cold-rolled steel sheet, the linear heated region acts as a barrier for growth of secondary recrystallized grains, and thereby the growth of secondary recrystallized grains is suppressed.

Citation List

Patent Document

Patent Document 1: Japanese Unexamined Patent Application, First Publication No. 2007-169762
Patent Document 2: PCT International Publication No. WO 2012/014290
Patent Document 3: Japanese Unexamined Patent Application, First Publication No. 2022-161269

SUMMARY OF INVENTION

Technical Problem

As described above, the magnetic characteristics of the grain oriented electrical steel sheet have been tried to be improved until today. However, it is insufficient to improve of the magnetic characteristics by the conventional techniques.
The present invention has been made in consideration of the above-mentioned situations. An object of the present invention is to provide a grain oriented electrical steel sheet excellent in both a magnetic flux density and an iron loss.

Solution to Problem

An aspect of the present invention employs the following.
[1] A grain oriented electrical steel sheet according to an aspect of the present invention,

wherein: when a deviation angle from an ideal Goss orientation based on a rotation axis parallel to a normal direction Z is defined as $\alpha$; when a deviation angle from the ideal Goss orientation based on a rotation axis parallel to a transverse direction C is defined as $\beta$; when a deviation angle from the ideal Goss orientation based on a rotation axis parallel to a rolling direction L is defined as y; when a deviation angle of a crystal orientation measured at a measurement point on a sheet surface is represented as ($\alpha$ $\beta$ y); when an angular deviation at the measurement point is defined as $\phi = (\alpha^2 + \beta^2)^{1/2}$; and when an average of the angular deviation $\phi$ obtained from at least 1000 measurement points with spacing of 1 mm in the rolling direction L is defined as ave$_{\phi L}$, the ave$\Phi_L$ satisfies ave$_{\phi L} \leq 4.0°$, and

wherein: when deviation angles of crystal orientations measured at two measurement points which are adjacent on the sheet surface and which have spacing of 1 mm are represented as ($\alpha_1 \beta_1 \gamma_1$) and ($\alpha^2 \beta_2 \gamma_2$); when a midpoint of two measurement points which satisfy $[(\alpha_2 - \alpha_1)^2 + (\beta_2 - \beta_1)^2 + (\gamma_2 - \gamma_1)^2]^{1/2} \geq 1.0°$ is defined as a grain boundary GB; when a grain size in the rolling direction L obtained based on the grain boundary GB is defined as $D_L$ in units of mm; and when a grain size which is at 10% by number base from largest in a case where the grain sizes $D_L$ obtained in the rolling direction L are sorted from largest to smallest is defined as $D_L 10$ in units of mm, the $D_L 10$ satisfies $D_L 10 \leq 100 - 15 \times ave\phi_L$.

Advantageous Effects of Invention

According to the above aspects of the present invention, it is possible to provide a grain oriented electrical steel sheet excellent in a magnetic flux density and an iron loss.

Specifically, according to the above aspects of the present invention, it is possible to provide the grain oriented electrical steel sheet in which the magnetic flux density is excellent because the angular deviation in the rolling direction is controlled to be small and the iron loss is excellent without performing the magnetic domain control (magnetic domain refinement) because the grain size in the rolling direction is controlled to be fine.

According to the above aspects of the present invention, it is possible to provide the grain oriented electrical steel sheet in which it is possible to reduce the negative effects caused by the conventional magnetic domain control (for instance, a deterioration of the transformer noise caused by laser irradiation for the magnetic domain control, a decrease in the magnetic flux density caused by groove formation, and the like), while also obtaining excellent magnetic flux density and iron loss.

BRIEF DESCRIPTION OF DRAWINGS

[FIG. 1] A schema illustrating measurement points for crystal orientation having spacing of 1 mm in rolling direction on the steel sheet.

[FIG. 2] A graph illustrating effect of an average of angular deviation and grain size in rolling direction on magnetic characteristics of a grain oriented electrical steel sheet.

DESCRIPTION OF EMBODIMENTS

Hereinafter, a preferred embodiment of the present invention is described in detail. However, the present invention is not limited only to the configuration which is disclosed in the present embodiment, and various modifications are possible without departing from the aspect of the present invention. In addition, the limitation range as described below includes a lower limit and an upper limit thereof. However, the value represented by "more than" or "less than" does not include in the limitation range. Unless otherwise noted, "%" of the chemical composition represents "mass%".

As described above, the existence frequency of practical Goss-oriented grains having small angular deviation $\theta$ and small angular deviation $\phi$ from the {110}<001> orientation which is the ideal Goss orientation increases as the heating rate of the primary annealing (decarburization annealing) increases. On the other hand, for the grains of the {778}<447> ($\approx${111}<112>) orientation, the {411}<148> orientation, and the like which have a $\Sigma9$ coincidence site lattice relationship with the Goss orientation and tend to be encroached by Goss-oriented grains (referred to as CSL oriented grains), the existence frequency conversely decreases as the heating rate of the primary annealing increases. Therefore, it was difficult to increase the fraction of the CSL oriented grains while increasing the fraction of the practical Goss-oriented grains by the primary annealing.

In the technique described in Patent Document 1, linear grooves are formed on a surface of a steel sheet by etching treatment, a heating rate near the region of the linear grooves is to be increased during primary annealing, and thereby, the region (region of the linear grooves) having a large fraction of Goss-oriented grains and a region (region other than the linear grooves) having a large fraction of CSL oriented grains are arranged. However, in this method, it is difficult to increase the difference in the heating rate during primary annealing between the region of the linear grooves and the other region, and the obtained effect is limited. Specifically, the difference between the heating rate in the region of the linear grooves and the heating rate in the region other than the linear grooves is not so large. For instance, even when the entire steel sheet is heated at 100 °C/sec, since the reduction of the thickness at the region by forming the grooves is only 10% or less as compared with the original thickness (since the depth of the grooves is 20 $\mu$m or less in general and is approximately 10% or less of the sheet thickness), the ratio between the heating rates is equal to or less than the ratio between the thicknesses for the same heat input when considering the thermal conduction of the steel sheet, and thus, the ratio between the fraction of the Goss-oriented grains in the region of the linear grooves and that in the region other than the linear grooves is less likely to increase as compared with the ration between the thickness in the region of the linear grooves and that in the region other than the linear grooves. In addition, in this method, the heating rate near the region of the linear grooves is increased during primary annealing, and thus, the grain size of the Goss-oriented grains formed in the region of the linear grooves after the primary annealing is not increased but is almost the same or fine as compared with the grain size of the primary recrystallized grains as an overall average.

In addition, in the technique described in Patent Document 2, the surface of the steel sheet is irradiated with a laser beam before final annealing. However, in this method, the laser beam irradiated region is only controlled to be the grain boundary of the secondary recrystallization, and the orientation of the Goss-oriented grains formed by the primary recrystallization is not controlled. In addition, the region heated by the laser irradiation is only the vicinity of the surface irradiated with the laser, the thermal diffusion to the peripheral region is remarkable, and thus, it is difficult to secure a thermal history that make the steel sheet recrystallize.

In addition, in the technique described in Patent Document 3, the sheet surface after cold rolling is irradiated with a laser beam. However, in this method, similarly to the above, the laser beam irradiated region is only controlled to be the grain boundary of the secondary recrystallization, the heating rate is not controlled, and the orientation of the Goss-oriented grains formed by the primary recrystallization is not controlled. In Patent Document 3, only the grain size of the secondary recrystallized grains in the rolling direction is reduced by making the laser beam irradiated region act as a barrier for the growth of the secondary recrystallized grains, and the temperature range of the grain growth in the locally heated region effective for increasing the size of the Goss-oriented grains in the locally heated region is not secured. Thus, in this method, the difference in the alignment degree to the Goss orientation in the inner and outer circumferences of the coil having different curvatures may be reduced, but the Goss-oriented grains having the crystal orientation close to the ideal Goss orientation cannot be obtained. That is, in this method, a decrease in the magnetic flux density is suppressed by coarsening the grain size of the secondary recrystallized grains in the rolling direction, but the orientation of the Goss-oriented grains is not fundamentally improved.

In the present embodiment, it has been found for the first time that a grain oriented electrical steel sheet having exceptional quality is obtained by performing local rapid heating on a steel sheet to form a locally heated region before performing primary annealing (decarburization annealing). The locally heated region that forms before the primary annealing is arranged locally on the surface of the steel sheet. The crystal structure of the locally heated region includes one or both of the recrystallized structure and the recovered structure at the end of the local rapid heating. The crystal structure of a non-locally heated region other than the locally heated region on the sheet surface consists of a cold-deformed structure which is as-cold rolled.

In the locally heated region, the heating rate is preferably 500 °C/sec or more, preferably 2000 °C/sec or more, preferably 5000 °C/sec or more, and more preferably 10000 °C/sec or more. As described above, it has been found that, when the locally heated region is formed on the surface of the steel sheet before the primary annealing and thereafter the steel sheet is primary annealed, a large number of grains having the practical Goss orientation are formed in the locally heated region. In addition, it has become clear that, among the practical Goss-oriented grains to be formed, the fraction of the Goss-oriented grains having small angular deviation θ and small angular deviation φ from the ideal Goss orientation is increased, and the grain size of the Goss-oriented grains is increased.

The frequency of Goss-oriented grains included in the locally heated region is higher than the frequency of Goss-oriented grains included in the non-locally heated region. This feature is derived from the deformed structure of the non-locally heated region. Specifically, it is derived from the fact that in a case where the local rapid heating is performed, recovery and recrystallization occur in the locally heated region and then the practical Goss-oriented grains tend to be formed and growth, but the recovery and recrystallization do not occur in the non-locally heated region.

The locally heated region having the above feature is dispersedly arranged on the surface of the steel sheet by the local rapid heating before primary annealing, and then the primary annealing and secondary annealing are further performed. The Goss-oriented grains formed in the locally heated region preferentially grow during secondary annealing after the primary annealing. Although Goss-oriented grains are formed in the locally heated region, and among them, the Goss-oriented grains that are close to the ideal Goss orientation, have particularly small angular deviation θ and small angular deviation φ, and have a large grain size are included. In the secondary recrystallization, the above Goss-oriented grains among the grains grow preferentially.

Since the Goss-oriented grains which act as the nucleus of the secondary recrystallization are arranged in the locally heated region, it is not necessary to form the Goss-oriented grains by the primary annealing in a matrix region other than the locally heated region, that is, the non-locally heated region other than the locally heated region. Accordingly, as the heat treatment condition of the primary annealing, a mild heating condition with a low heating rate may be employed, and a primary annealing condition may be employed in which a large number of CSL oriented grains having the **{ 111 }<112>** orientation and the {411}<148> orientation, which are easily encroached, are formed in the non-locally heated region. For instance, by controlling the heating rate of the primary annealing to 300 °C/sec or less, a large number of Goss-oriented grains close to the ideal Goss orientation and having large grain size are formed in the locally heated region, while Goss-oriented grains are hardly formed in the non-locally heated region, and conversely, a large number of CSL oriented grains are formed.

As described above, in the locally heated region of the steel sheet (decarburization-annealed steel sheet) in which the local rapid heating and the primary annealing have been completed, a large number of Goss-oriented grains close to the ideal Goss orientation and having large grain size are included. On the other hand, in the matrix region (non-locally heated region), the Goss-oriented grains having large size are hardly included, whereas a large number of CSL oriented grains that are easily encroached may be included.

**In** addition, at the time when the locally heated regions are discretely arranged on the sheet surface by the local rapid heating before primary annealing, if the locally heated regions are appropriately arranged on the sheet surface, it is possible to control the size, shape, and arrangement of the grains after the secondary annealing. For instance, the Goss-oriented grain initiates to grow from one locally heated region, the grain growth stops when the grain encounters with another Goss-oriented grain which initiates to grow from an adjacent locally heated region, and thereby, the grain size of the Goss-oriented grains after secondary recrystallization becomes small. In the case, it is possible to obtain the steel sheet excellent in iron loss. In particular, as described above, in the initial stage of the secondary annealing, the Goss-oriented grains preferentially grown from the local heating affected region have the crystal orientation close to the ideal Goss orientation, and as a result, excellent magnetic flux density can be obtained even though the secondary recrystallized grain size is small.

A grain oriented electrical steel sheet according to the present embodiment is obtained on the basis of the above technical. The features of the grain oriented electrical steel sheet according to the present embodiment will be described in detail.

A grain oriented electrical steel sheet (base steel sheet) according to the present embodiment, wherein

when a deviation angle from an ideal Goss orientation based on a rotation axis parallel to a normal direction Z is defined as $\alpha$,

when a deviation angle from the ideal Goss orientation based on a rotation axis parallel to a transverse direction C is defined as $\beta$,

when a deviation angle from the ideal Goss orientation based on a rotation axis parallel to a rolling direction L is defined as y,

when a deviation angle of a crystal orientation measured at a measurement point on a sheet surface is represented as ($\alpha$ $\beta$ y),

when an angular deviation at the measurement point is defined as $\phi = (\alpha^2 + \beta^2)^{1/2}$, and

when an average of the angular deviation $\phi$ obtained from at least 1000 measurement points with spacing of 1 mm in the rolling direction L is defined as ave$\phi_L$,

the ave$\phi_L$ satisfies aved$_L \leq 4.0°$.

In addition, a grain oriented electrical steel sheet (base steel sheet) according to the present embodiment, wherein

when deviation angles of crystal orientations measured at two measurement points which are adjacent on the sheet surface and which have spacing of 1 mm are represented as ($\alpha_1$ $\beta_1$ $\gamma_1$) and ($\alpha_2$ $\beta_2$ $\gamma_2$),

when a midpoint of two measurement points which satisfy $[(\alpha_2 - \alpha_1)^2 + (\beta_2 - \beta_1)^2 + (\gamma_2 - \gamma_1)^2]^{1/2} \geq 1.0°$ is defined as a grain boundary GB,

when a grain size in the rolling direction L obtained based on the grain boundary GB is defined as D$_L$ in units of mm, and

when a grain size which is at 10% by number base from largest in a case where the grain sizes D$_L$ obtained in the rolling direction L are sorted from largest to smallest is defined as D$_L$10 in units of mm,

the D$_L$10 satisfies D$_L$10 $\leq$ 100 - 15 $\times$ ave$\phi_L$.

In the grain oriented electrical steel sheet according to the present embodiment, in a case where all of the above features are simultaneously satisfied, it is possible to reduce the negative effects caused by the conventional magnetic domain control (for instance, a deterioration of the transformer noise caused by laser irradiation for the magnetic domain control, a decrease in the magnetic flux density caused by groove formation, and the like), and also, possible to improve both the magnetic flux density and the iron loss.

In addition, in the present embodiment, the angular deviation $\phi$ is defined using the deviation angle $\alpha$ and the deviation angle $\beta$. The general angular deviation $\theta$ is often evaluated using three components: the deviation angle $\alpha$, the deviation angle $\beta$, and the deviation angle $\gamma$. However, in the present embodiment, the angular deviation $\phi$ is defined using two components: the deviation angle $\alpha$ and the deviation angle $\beta$ except for the deviation angle y which does not significantly influence the magnetic flux density and the iron loss. It is possible to obtain the above effects by satisfying the above features using the angular deviation $\phi$. On the other hand, the grain boundary and the grain size may be determined using three components: the deviation angle $\alpha$, the deviation angle $\beta$, and the deviation angle y.

The fact that the above ave$\phi_L$ is 4.0° or less indicates that the angular deviation $\phi$ is averagely small at the measurement points along the rolling direction L. That is, it indicates that the angular deviation between the rolling direction L and the direction of the magnetization easy axis is small. As a result, the magnetic characteristics, particularly the magnetic flux density, are favorably improved. The ave$\Phi_L$ is preferably 3.5° or less, preferably 3.2° or less, more preferably 3.0° or less, and still more preferably 2.7° or less. On the other hand, since the ave$\phi_L$ is preferably as small as possible, a lower limit thereof is not particularly limited. However, since it is not easy to industrially control ave$\Phi_L$ to zero, for instance, the ave$\phi_L$ may be 0.5° or more, and may be 1.0° or more.

The fact that the above $D_L 10$ is (100 - 15 × ave$\phi_L$) or less in units of mm indicates that the grains do not grow coarsely in the rolling direction L. When the grains do not grow coarsely in the rolling direction L, it is possible to suppress an increase in the above deviation angles, particularly the deviation angle β. When the increase in the deviation angle β is suppressed, a decrease in the magnetic flux density is suppressed. Moreover, when the grains do not grow coarsely in the rolling direction L, the magnetic domain is refined even when the conventional magnetic domain control technique is not applied. When the magnetic domain is refined, a increase in the iron loss is suppressed. When the $D_L 10$ satisfies the above condition, the magnetic flux density and the iron loss are favorably improved. The $D_L 10$ is preferably (90 - 15 × ave$\phi_L$) or less in units of mm, and more preferably (80 - 15 × ave$\phi_L$) or less in units of mm. On the other hand, since the $D_L 10$ is preferably as small as possible, a lower limit thereof is not particularly limited. For instance, the $D_L 10$ may be 5 mm or more, and may be 10 mm or more.

For the deviation angle α, the deviation angle β, the deviation angle y, and the like explained above, a measurement line including at least 1000 measurement points with 1 mm spacing on the rolled surface is arranged, and the crystal orientations may be measured. For instance, the crystal orientation may be measured by the X-ray diffraction method (Laue method). The Laue method is the method such that X-ray beam is irradiated the steel sheet with and that the diffraction spots which are transmitted or reflected are analyzed. By analyzing the diffraction spots, it is possible to identify the crystal orientation at the point irradiated with X-ray beam. Moreover, by changing the irradiated point and by analyzing the diffraction spots in plural points, it is possible to obtain the distribution of the crystal orientation based on each irradiated point. The Laue method is the preferred method for identifying the crystal orientation of the metallographic structure in which the grains are coarse.

The measurement points for the crystal orientation may be at least 1000 points. It is preferable that the number of measurement points appropriately increases depending on the grain size of the secondary recrystallized grain. For instance, when the number of secondary recrystallized grains included in the measurement line is less than 20 grains in a case where the number of measurement points for identifying the crystal orientation is 1000 points, it is preferable to extend the above measurement line by increasing the measurement points with 1 mm spacing so as to include 20 grains or more of the secondary recrystallized grains in the measurement line. Moreover, when it is difficult to arrange 1000 measurement points in one measurement line, plural measurement lines may be arranged in order to measure the crystal orientation at the measurement points of 1000 or more in total.

The crystal orientations are identified at each measurement point with 1 mm spacing on the rolled surface, and then, the deviation angle α, the deviation angle β, and the deviation angle γ are identified at each measurement point. Based on the identified deviation angles at each measurement point, the angular deviation $\phi$, the ave$\phi_L$, the grain boundary GB, the grain size $D_L$, and the $D_L 10$ may be obtained. Herein, the $D_L 10$ may be obtained as the grain size which is at 10% by number base from largest in a case where the grains with the grain size $D_L$ of 2 mm or more are sorted from largest to smallest. Moreover, in a case where it is difficult to judge which grain the X-ray diffraction results come from because the irradiated region of X-ray beam spreads over two grains at the measurement point for the crystal orientation by Laue method, 0.5 mm may be respectively added to the grain size of these two grains.

Although the grain oriented electrical steel sheet according to the present embodiment includes the above technical features, the features may be express the following. The features of the grain oriented electrical steel sheet according to the present embodiment are explained again.

The grain oriented electrical steel sheet according to the present embodiment, wherein

$\phi$m which is defined below may satisfy $\phi$m ≤ 4.0°, and

D10 which is defined below may be equal to or lower than f ($\phi$m) which is defined as a following formula (3).

Herein, n points (at least 1000 points) with 1 mm pitch for the measurement points for the crystal orientation are determined in the rolling direction (RD), the deviation angles $\alpha i$, $\beta i$, and $yi$ from the ideal {110}<001> orientation around ND, TD, and RD are measured at a measurement point i (i = 1 to n), $\phi i$ is determined by a following formula (1), and an average angular deviation $\phi$m is determined by a following formula (2).

$$\phi i = (\alpha i^2 + \beta i^2)^{1/2} \qquad (1)$$

$$\phi m = [\Sigma_{i=1}^{n} \phi i]/n = [\Sigma_{i=1}^{n} (\alpha i^2 + \beta i^2)^{1/2}]/n \qquad (2)$$

$$f (\phi m) = 100 - 15 \times \phi m \qquad (3)$$

Moreover, when the value of $[(\alpha_i - \alpha_{i=1})^2 + (\beta_i - \beta_{i=1})^2 + (\gamma_i - \gamma_{i=1})^2]^{1/2}$ is shifted by 1° or more between adjacent measurement points in the line of the measurement points for the crystal orientation in the rolling direction (RD), it is judged that a grain boundary exists between the adjacent measurement points, a grain size D in the rolling direction (RD) of one grain is defined as the distance between adjacent grain boundaries, and D10 is defined as the grain size of grain at 10% from largest in the grain size D of whole grains in a case where the grains are arranged in descending order of the grain size D.

With respect to the angular deviation $\phi$, the average angular deviation $\phi m$ of the steel sheet in the rolling direction (RD) is defined.

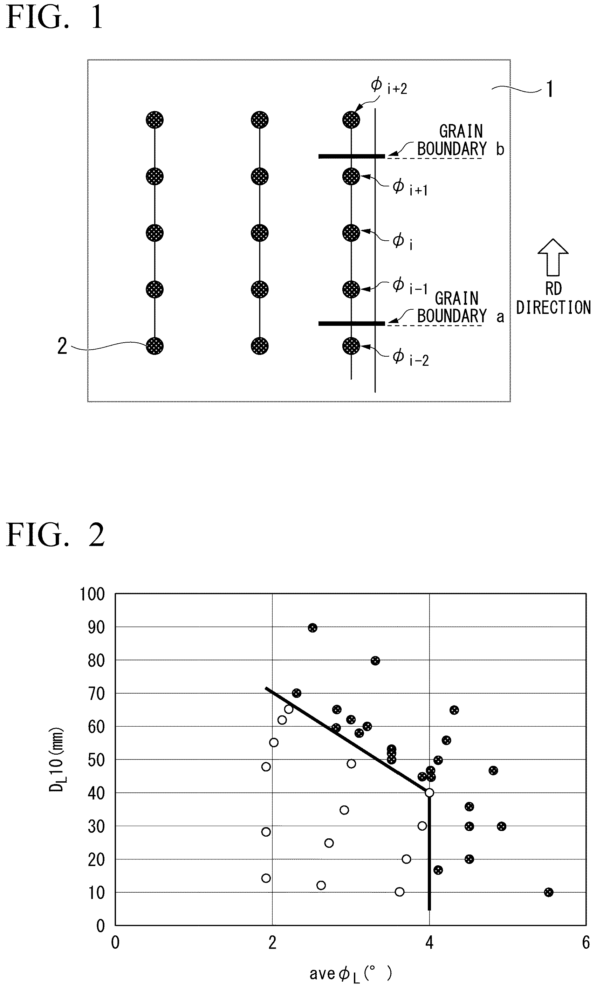

As shown in FIG. 1, the line of the measurement points is determined by setting n points (at least 1000 points) with 1 mm pitch for the measurement points for the crystal orientation along the rolling direction (RD). The crystal orientation may be measured using an X-ray diffractometers based on the Laue method. The deviation angles $\alpha i$, $\beta i$, and $\gamma i$ from the ideal {110}<001> orientation around the normal direction (ND), the transverse direction (TD), and the rolling direction (RD) are measured, and $\phi i$ is determined by the above formula (1). Thereafter, the average angular deviation $\phi m$ is determined by the above formula (2). Herein, for determining the measurement position, one line in the transverse direction (TD) may be set at appropriate position as the line of the measurement points, or plural lines in the transverse direction (TD) may be set as the line of the measurement points. In particular, in order to obtain the information of the crystal orientation expressing the average magnetic characteristics in the transverse direction when the magnetic characteristics are uneven in the transverse direction, it is necessary to set plural lines as the line of the measurement points in the width direction (transverse direction (TD)) of coil (steel strip). When plural lines in the transverse direction (TD) are set as the line of the measurement points and the measurements are performed, the value of n becomes the number of all measurement points.

Next, the grain size (D10) of grain at 10% from largest in the grain size D of whole grains in a case where the grains are arranged in descending order of the grain size D is defined.

As explained above, the crystal orientations are measured at the measurement points. When the value of $[(\alpha_i - \alpha_{i=1})^2 + (\beta_i - \beta_{i=1})^2 + (\gamma_i - \gamma_{i=1})^2]^{1/2}$ is shifted by 1° or more between adjacent measurement points in the rolling direction (RD), it is judged that the grain boundary exists between the adjacent measurement points. When the above value is less than 1° between adjacent measurement points, it is judged that the grain boundary does not exist between the adjacent measurement points. In the instance shown in FIG 1, when $\phi$ at the measurement point located in the center of the rolling direction (RD) is $\Phi i$, the value of $[(\alpha_{i-1} - \alpha_{i-2})^2 + (\beta_{i-1} - \beta_{i-2})^2 + (\gamma_{i-1} - \gamma_{i-2})^2]^{1/2}$ is more than 1° between $\phi_{i-1}$ and $\phi_{i-2}$, and the grain boundary a exists between these measurement points. Also, the value of $[(\alpha_{i+1} - \alpha_{i+2})^2 + (\beta_{i+1} - \beta_{i+2})^2 + (\gamma_{i+1} - \gamma_{i+2})^2]^{1/2}$ is more than 1° between $\phi_{i+1}$ and $\phi_{i+2}$, and the grain boundary b exists between these measurement points. The grain size D in the rolling direction (RD) determined by the grain boundary a and the grain boundary b is defined as 1 mm $\times$ [(i+2) - (i-1)] = 3 mm.

Moreover, although the grain size D obtained by the above procedure is 1 mm or more, the grain size D of 2 mm or more is adopted for determining the D10.

As shown above, after determining the grain boundaries and grain size D measured along the rolling direction (RD), D10 is defined as the grain size of grain at 10% from largest in whole grains in a case where the grains with the D value of 2 mm or more are arranged in descending order of the D value.

Herein, in a case where the X-ray diffracted area at the measurement point includes two grains and it cannot be judged that the point derives from which grains, 0.5 mm is respectively given to two grains for determining the grain size in the above case.

Hereinafter, the investigations carried out by the present inventors will be described in detail.

As an aspect of the above local rapid heating, a case where spot electric heating by electric resistance heating is used will be described. In the spot electric heating, spot electrodes are arranged and contacted so as to be opposite to each other on both surfaces of the steel sheet, and a current flows between the spot electrodes to perform the spot electric heating on a region where the electrodes are held on the steel sheet. Steel having the composition indicated in Table 1 was used, and hot rolling and cold rolling were performed to obtain a cold-rolled steel sheet having a thickness of 0.22 mm. The steel sheet was subjected to the spot electric heating. The spot electric heating was performed using copper electrodes having a diameter of 3 mm under the conditions of a flowing current of 5.0 kA or less which was a range where the sheet surface was not melted, a time of current flow of 20 to 80 milliseconds, an electrode force of 50 to 150 kgf, and an electrode retention time after current flow of 0.1 to 0.5 seconds.

[Table 1]

| CHEMICAL COMPOSITION (mass%) | | | | | |
|---|---|---|---|---|---|
| C | Si | Mn | S | Al | N |
| 0.06 | 3.4 | 0.10 | 0.006 | 0.026 | 0.008 |

This cold-rolled steel sheet was subjected to decarburization annealing (primary annealing). In the decarburization annealing, the cold-rolled steel sheet was heated at a heating rate of 20 °C/sec and held at 830C for 90 seconds. The steel sheet was further subjected to nitridation, applying an annealing separator including MgO as a main component, and then secondary annealing. The secondary annealing conditions are a hydrogen-nitrogen atmosphere, a heating rate of 15°C/hr (°C/hour), and holding at 1200°C for 20hr (hour).

For the grain oriented electrical steel sheets manufactured by the above procedure (however, the magnetic domain control was not performed), the $\phi m$ (ave$\phi_L$) and the D10 ($D_L10$) were measured, and also, the magnetic characteristics were evaluated. FIG. 2 shows the effect of an average of angular deviation and grain size in rolling direction on magnetic characteristics of a grain oriented electrical steel sheet. **In** FIG. 2, the horizontal axis is $\phi m$ (ave$\phi_L$) and the vertical axis is D10 ($D_L10$). Also, in FIG. 2, "∘" indicates the case where $B_8 \geq 1.93T$ and $W_{17/50} \leq 0.79W/kg$, and "·" indicates the case where at least one of $B_8$ and $W_{17/50}$ is not satisfied.

As shown in FIG. 2, excellent magnetic characteristics are obtained in the region where the $\phi m$ (ave$\phi_L$) is 4.0° or less and where D10 is equal to or lower than f ($\phi m$) (where $D_L10$ is equal to or lower than $(100 - 15 \times ave\phi_L)$). Specifically, it is shown that both the magnetic flux density and the iron loss are excellent even when the magnetic domain control is not performed.

An electrode used for spot electric heating has a circular shape, and the diameter thereof is preferably 0.5 to 10 mm$\phi$, and more preferably 1 to 5 mm$\phi$ in an equivalent circle diameter. Note that, in the above description, the electrode having the circular shape is used, but in so far as the heating rate of the cold-rolled steel sheet is locally increased and Goss-oriented grains are formed and grown in this region, the electrode shape may be another shape, for instance, an elliptical shape or a linear shape.

Favorable chemical composition of the grain oriented electrical steel sheet according to the present embodiment is explained.

The grain oriented electrical steel sheet according to the present embodiment may contain, as a chemical composition, Si: 2.0% to 7.0% in mass percentage and the balance consisting of Fe and impurities.

The above chemical composition is favorable to control the crystal orientation to align in the {110}<001> orientation.

In addition, this grain oriented electrical steel sheet may contain a known optional element as substitution for part of Fe for improving the magnetic characteristics. A lower limit of the optional element does not need to be limited, and the lower limit may be 0%. Moreover, an upper limit of the optional element may be a value in which the magnetic flux density or the iron loss does not significantly deteriorate. For instance, the upper limit of each optional element is described below.

The grain oriented electrical steel sheet according to the present embodiment (base steel sheet) may contain, as a chemical composition, by mass%:

Si: 2.0 to 7.0%,
C: 0 to 0.0050%,
Mn: 0 to 1.0%,
S and Se: 0 to 0.0150% in total,
Al: 0 to 0.0650%,
N: 0 to 0.0050%,
Nb, V, Mo, Ta, and W: 0 to 0.050% in total,
Cu: 0 to 0.40%,
Bi: 0 to 0.010%,
B: 0 to 0.080%,
P: 0 to 0.50%,
Ti: 0 to 0.0150%,
Sn: 0 to 0.10%,
Sb: 0 to 0.10%,
Cr: 0 to 0.30%,
Ni: 0 to 1.0%, and
the balance consisting of Fe and impurities.

Si: 2.0 to 7.0%

Si (silicon) is a basic element for the base steel sheet. When the Si content is less than 2.0%, the eddy-current loss cannot be sufficiently reduced, so that favorable magnetic characteristics cannot be obtained. Therefore, the Si content of the base steel sheet is 2.0% or more. The Si content is preferably 2.50% or more, and more preferably 3.0% or more. On the other hand, when the Si content is more than 7.0%, the steel sheet is embrittled, and the passability is remarkably deteriorated during manufacture, and thus the Si content of the base steel sheet is 7.0% or less. The Si content is preferably 4.50% or less, and more preferably 4.0% or less.

C: 0 to 0.0050%

C (carbon) is an optional element for the base steel sheet. C is contained in a steel piece (slab), but when C excessively remains in the base steel sheet after the final annealing, favorable iron loss characteristics may not be obtained. Therefore, the C content of the base steel sheet may be 0.0050% or less. The C content is preferably 0.0040% or less, and more preferably 0.0030% or less. On the other hand, the lower limit of the C content of the base steel sheet is not particularly limited, and it may be 0%. However, since it is not industrially easy to control the C content to 0%, the C content may be more than 0% or 0.00010% or more.

Mn: 0 to 1.0%

Mn (manganese) is a basic element for the base steel sheet. Although Mn is contained in the steel piece (slab), when the content is excessive, the phase of steel are transformed during secondary recrystallization annealing, the secondary recrystallization does not sufficiently proceed, and favorable magnetic characteristics cannot be obtained. Thus, the Mn content of the base steel sheet may be 1.0% or less. The Mn content is preferably 0.50% or less, and more preferably 0.20% or less. On the other hand, the lower limit of the Mn content of the base steel sheet is not particularly limited, and it may be 0%. However, since Mn forms MnS and/or MnSe which act as the inhibitor, the Mn content may be more than 0% or 0.00010% or more.

S and Se: 0 to 0.0150% in total

S (sulfur) and Se (selenium) are optional elements for the base steel sheet. S and Se are contained in a steel piece (slab), but when S and Se excessively remain in the base steel sheet after the final annealing, magnetic characteristics may be adversely affected. Therefore, the total amount of S and Se of the base steel sheet may be 0.0150% or less. The total amount of S and Se is preferably 0.010% or less, and more preferably 0.0050% or less. On the other hand, the lower limit of the total amount of S and Se of the base steel sheet is not particularly limited, and it may be 0%. However, since S and Se form MnS or MnSe and have an effect as an inhibitor at the time of secondary recrystallization, the total amount of S and Se may be more than 0% or 0.00010% or more.

Al: 0 to 0.0650%

Al (aluminum) (sol.Al) is an optional element for the base steel sheet. Al is contained in a steel piece (slab), but when Al excessively remains in the base steel sheet after the final annealing, magnetic characteristics may be adversely affected. Therefore, the Al content of the base steel sheet may be 0.0650% or less. The Al content is preferably 0.040% or less, and more preferably 0.035% or less. On the other hand, the lower limit of the Al content of the base steel sheet is not particularly limited, and it may be 0%. However, since Al forms AlN and has an effect as an inhibitor at the time of secondary recrystallization, the Al content may be more than 0% or 0.00010% or more. Herein, the above Al content expresses acid-soluble Al (sol.Al).

N: 0 to 0.0050%

N (nitrogen) is an optional element for the base steel sheet. N is contained in a steel piece (slab), but when N excessively remains in the base steel sheet after the final annealing, magnetic characteristics may be adversely affected. Therefore, the N content of the base steel sheet may be 0.0050% or less. The N content is preferably 0.0040% or less, and more preferably 0.0030% or less. On the other hand, the lower limit of the N content of the base steel sheet is not particularly limited, and it may be 0%. However, since N forms AlN and has an effect as an inhibitor at the time of secondary recrystallization, the N content may be more than 0% or 0.00010% or more.

Nb, V, Mo, Ta, and W: 0 to 0.050% in total

Nb (niobium), V (vanadium), Mo (molybdenum), Ta (tantalum), and W (tungsten) are optional elements for the base steel sheet. The Nb group element (at least one of Nb, V, Mo, Ta, and W) excessively remains in the base steel sheet, magnetic characteristics may be adversely affected. Therefore, the total amount of Nb, V, Mo, Ta, and W of the base steel sheet may be 0.050% or less. The Nb group element is preferably 0.030% or less, more preferably 0.020% or less, and still more preferably 0.010% or less. On the other hand, the total amount of Nb, V, Mo, Ta, and W of the base steel sheet is not particularly limited, and it may be 0%. However, since Nb, V, Mo, Ta, or W forms carbides, nitrides, or carbonitrides and has an effect as an inhibitor at the time of secondary recrystallization, the total amount of Nb, V, Mo, Ta, and W may be more than 0% or 0.003% or more.

Cu: 0 to 0.40%

Cu (copper) is an optional element for the base steel sheet. When the Cu content exceeds 0.40%, the steel sheet may be embrittled during hot rolling. Therefore, the Cu content of the base steel sheet may be 0.40% or less. The Cu content is preferably 0.30% or less, and more preferably 0.10% or less. On the other hand, the lower limit of the Cu content is not particularly limited, and it may be 0%. However, since Cu has an effect of improving magnetic characteristics by increasing the development degree of the Goss orientation, the Cu content may be more than 0% or 0.010% or more.

Bi: 0 to 0.010%

Bi (bismuth) is an optional element for the base steel sheet. When the Bi content is more than 0.010%, the coating adhesion may be deteriorated. **In** addition, when the purification at the time of the final annealing is insufficient and Bi remains excessively, the magnetic characteristics may be adversely affected. Therefore, the Bi content of the base steel sheet may be 0.010% or less. The Bi content is preferably 0.0050% or less, more preferably 0.0020% or less, and still more preferably 0.0010% or less. On the other hand, the lower limit of the Bi content is not particularly limited, and it may be 0%. However, since Bi has an effect of improving magnetic characteristics, the Bi content may be more than 0% or 0.00050% or more.

B: 0 to 0.080%

B (boron) is an optional element for the base steel sheet. When the B content exceeds 0.080%, The dispersion (standard deviation) of the magnetic flux density may increase. Thus, the B content may be 0.080% or less. The B content is preferably 0.070% or less, and more preferably 0.060% or less. On the other hand, the lower limit of the B content is not particularly limited, and it may be 0%. However, since B forms nitrides and has an effect as an inhibitor at the time of secondary recrystallization, the B content may be more than 0% or 0.00050% or more.

P: 0 to 0.50%

P (phosphorus) is an optional element for the base steel sheet. When the P content exceeds 0.50%, the workability of the steel sheet may be significantly deteriorated. Therefore, the P content of the base steel sheet may be 0.50% or less. The P content is preferably 0.30% or less, and more preferably 0.10% or less. On the other hand, the lower limit of the P content is not particularly limited, and it may be 0%. However, since P has an effect of improving the texture and improving the magnetic characteristics of the steel sheet, the P content may be more than 0% or 0.0020% or more.

Ti: 0 to 0.0150%

Ti (titanium) is an optional element for the base steel sheet. When the Ti content exceeds 0.0150%, the magnetic characteristics may be significantly deteriorated. Therefore, the Ti content of the base steel sheet may be 0.0150% or less. The Ti content is preferably 0.0130% or less, and more preferably 0.010% or less. On the other hand, the lower limit of the Ti content is not particularly limited, and it may be 0%. However, since Ti forms carbides, nitrides, or carbonitrides and has an effect as an inhibitor at the time of secondary recrystallization, the Ti content may be more than 0% or 0.0020% or more.

Sn: 0 to 0.10%

Sn (tin) is an optional element for the base steel sheet. When the Sn content is more than 0.10%, secondary recrystallization may become unstable, and magnetic characteristics may be adversely affected. Therefore, the Sn content of the base steel sheet may be 0.10% or less. The Sn content is preferably 0.090% or less, and more preferably 0.080% or less. On the other hand, the lower limit of the Sn content is not particularly limited, and it may be 0%. However, since Sn has an effect of improving magnetic characteristics by increasing the development degree of the Goss orientation, the Sn content may be more than 0% or 0.0050% or more.

Sb: 0 to 0.10%

Sb (antimony) is an optional element for the base steel sheet. When the Sb content is more than 0.10%, magnetic characteristics may be adversely affected. Therefore, the Sb content of the base steel sheet may be 0.10% or less. The Sb content is preferably 0.090% or less, and more preferably 0.080% or less. On the other hand, the lower limit of the Sb content is not particularly limited, and it may be 0%. However, since Sb functions as an inhibitor and has an effect of stabilizing secondary recrystallization, the Sb content may be more than 0% or 0.010% or more.

Cr: 0 to 0.30%

Cr (chromium) is an optional element for the base steel sheet. When the Cr content is more than 0.30%, a Cr oxide is formed, and magnetic characteristics may be adversely affected. Therefore, the Cr content of the base steel sheet may be 0.30% or less. The Cr content is preferably 0.20% or less, and more preferably 0.10% or less. On the other hand, the lower limit of the Cr content is not particularly limited, and it may be 0%. However, since Cr has an effect of improving magnetic characteristics by increasing the development degree of the Goss orientation, the Cr content may be more than 0% or 0.010% or more.

Ni: 0 to 1.0%

Ni (nickel) is an optional element for the base steel sheet. When the Ni content is more than 1.0%, secondary recrystallization may become unstable. Therefore, the Ni content of the base steel sheet may be 1.0% or less. The Ni content is preferably 0.20% or less, and more preferably 0.10% or less. On the other hand, the lower limit of the Ni content is not particularly limited, and it may be 0%. However, since Ni has an effect of reducing the iron loss by increasing the electric resistance, the Ni: content may be more than 0% or 0.010% or more.

The base steel sheet of the grain oriented electrical steel sheet according to the present embodiment may contain impurities. Herein, the impurities correspond to elements which are contaminated during industrial manufacture of steel from ores and scrap that are used as a raw material of steel, or from environment of a manufacturing process.

The chemical composition of the base steel sheet described above may be measured by a general analysis method. For instance, the chemical composition may be measured by using ICP-AES (Inductively Coupled Plasma-Atomic Emission Spectrometer: inductively coupled plasma emission spectroscopy spectrometry). Herein, the acid soluble Al may be measured by ICP-AES using filtrate after heating and dissolving the sample in acid. **In** addition, C and S may be measured by the infrared absorption method after combustion, N may be measured by the thermal conductometric method after fusion in a current of inert gas, and O may be measured by, for instance, the non-dispersive infrared absorption method after fusion in a current of inert gas.

Herein, the chemical composition is a component of the base steel sheet. When the grain oriented electrical steel sheet, which is a measurement sample, includes an insulation coating or the like on the surface, the chemical composition is measured after removing the coating or the like by the method described below.

For instance, as a method for removing the insulation coating, the grain oriented electrical steel sheet with the coating may be immersed in hot alkaline solution. Specifically, it is possible to remove the insulation coating from the grain oriented electrical steel sheet by immersing the steel sheet in sodium hydroxide aqueous solution which includes 30 to 50 mass% of NaOH and 50 to 70 mass% of $H_2O$ at 80 to 90°C for 5 to 10 minutes, washing it with water, and then, drying it. Moreover, the immersing time in sodium hydroxide aqueous solution may be adjusted depending on the thickness of the insulation coating.

Moreover, as a method for removing a forsterite film (glass film), the grain oriented electrical steel sheet in which the insulation coating is removed by the above method may be immersed in hot hydrochloric acid. Specifically, it is possible to remove the forsterite film by previously investigating the preferred concentration of hydrochloric acid for removing the forsterite film to be dissolved, immersing the steel sheet in the hydrochloric acid with the above concentration (for instance, 30 to 40 mass% of HCl) at 80 to 90°C for 1 to 5 minutes, washing it with water, and then, drying it. In general, film and coating are removed by selectively using the solution, for example, the alkaline solution is used for removing the insulation coating, and the hydrochloric acid is used for removing the forsterite film.

Next, a preferred method for manufacturing the grain oriented electrical steel sheet according to the present embodiment will be described.

The method for manufacturing the grain oriented electrical steel sheet according to the present embodiment is not limited to the following method. The following manufacturing method is an instance for manufacturing the grain oriented electrical steel sheet according to the present embodiment.

Moreover, the processes and the quantitative conditions in each process described below are an instance employed to confirm the operability of the present embodiment, so that the present embodiment is not limited to the processes and the quantitative values. The method for manufacturing the grain oriented electrical steel sheet according to the present embodiment can employ various types of conditions as long as the conditions do not depart from the scope of the present embodiment and can achieve the object of the present embodiment.

**In** the method for manufacturing the grain oriented electrical steel sheet according to the present embodiment, it is possible to apply a conventional known method for manufacturing the grain oriented electrical steel sheet as fundamental processes. For instance, the conventional method for manufacturing the grain oriented electrical steel sheet includes a manufacturing method utilizing MnS and AlN as inhibitor which are formed by high temperature slab heating, a manufacturing method utilizing AlN as inhibitor which is formed by low temperature slab heating and subsequent nitridation, and the like. The method for manufacturing the grain oriented electrical steel sheet according to the present embodiment is not limited to a specific manufacturing method. Hereinafter, the method which employs the low temperature slab heating with the nitridation is explained for instance.

(Casting Process)

In the casting process, a slab is made. For instance, a method for making the slab is as follow. A molten steel is made (a steel is melted). The slab is made by using the molten steel. The slab may be made by continuous casting. An ingot may be made by using the molten steel, and then, the slab may be made by blooming the ingot. A thickness of the slab is not particularly limited. The thickness of the slab may be 150 to 350 mm for instance. The thickness of the slab is preferably 220 to 280 mm. The slab with the thickness of 10 to 70 mm which is a so-called thin slab may be used. When using the thin slab, it is possible to omit a rough rolling before final rolling in the hot rolling process.

For instance, as the chemical composition, the above slab may include the following elements.

C: 0.085% or less

Carbon (C) is an element effective in controlling the primary recrystallized structure in the manufacturing process. However, when the content in the final product is excessive, the magnetic characteristics are negatively affected. Thus, the C content may be 0.085% or less. The upper limit of the C content is preferably 0.075%. C is decarburized and purified in the decarburization annealing process and the final annealing process, and then, the content becomes 0.005% or less. When C is included, the lower limit of the C content may be more than 0%, and may be 0.001% from the productivity standpoint in the industrial production.

Si: 2.0 to 7.0%

Silicon (Si) is an element which increases the electric resistance of the grain oriented electrical steel sheet and thereby decreases the iron loss. When the Si content is less than 2.0%, an austenite transformation occurs during the final annealing and the crystal orientation of the grain oriented electrical steel sheet is impaired. On the other hand, when the Si content is more than 7.0%, the cold workability deteriorates and the cracks tend to occur during cold rolling. The lower limit of the Si content is preferably 2.5%, and is more preferably 3.0%. The upper limit of the Si content is preferably 4.5%, and is more preferably 4.0%.

Mn: 0.05 to 1.00%

Manganese (Mn) forms MnS and/or MnSe by bonding to S and/or Se, which act as the inhibitor. When Mn is included and the Mn content is 0.05 to 1.00%, the secondary recrystallization becomes stable. The nitride of the Nb group element can bear part of the function of the inhibitor. In the case, the inhibitor intensity as MnS and/or MnSe in general is controlled weakly. Thus, the upper limit of the Mn content is preferably 0.50%, and is more preferably 0.20%.

At least one of S and Se: 0.003 to 0.035% in total

Sulfur (S) and Selenium (Se) form MnS and/or MnSe by bonding to Mn, which act as the inhibitor. When at least one of S and Se is included, and when the total amount of S and Se is 0.003 to 0.035%, the secondary recrystallization becomes stable. The nitride of the Nb group element can bear part of the function of the inhibitor. **In** the case, the inhibitor intensity as MnS and/or MnSe in general is controlled weakly. Thus, the upper limit of the total amount of S and Se is preferably 0.025%, and is more preferably 0.010%. When S and/or Se remain in the steel after the final annealing, the compound is formed, and thereby, the iron loss is deteriorated. Thus, it is preferable to reduce S and Se as much as possible by the purification during the final annealing.

Here, the total amount of S and Se represents that at least one of S and Se is included and the amount thereof corresponds to the above total amount.

Al: 0.010 to 0.065%

Aluminum (Al) forms (Al, Si)N by bonding to N, which acts as the inhibitor. When Al is included and the Al content is 0.010 to 0.065%, the inhibitor AlN formed by the nitridation mentioned below expands the temperature range of the secondary recrystallization, and the secondary recrystallization becomes stable especially in higher temperature range. Therefore, the Al content is 0.010 to 0.065%. The lower limit of the Al content is preferably 0.020%, and is more preferably 0.025%. The upper limit of the Al content is preferably 0.040%, and is more preferably 0.035% from the stability standpoint in the secondary recrystallization.

N: 0.012% or less

Nitrogen (N) bonds to Al and acts as the inhibitor. The lower limit thereof is not limited because it is possible to include N by the nitridation in midstream of the manufacturing process. For instance, the lower limit of the N content may be more than 0% or may be 0.001%. When N is included and the N content is more than 0.012%, the blister which is a kind of defect tends to be formed in the steel sheet. The upper limit of the N content is preferably 0.010%, and is more preferably 0.009%. N is purified in the final annealing process, and then, the N content becomes 0.005% or less after the final annealing process.

The balance of the chemical composition consists of Fe and impurities. The impurities correspond to elements which are contaminated during industrial production of steel from ores and scrap that are used as a raw material of steel, or from environment of a manufacturing process. For instance, an upper limit of the impurities may be 5% in total.

In addition to solving manufacturing problems, in consideration of the influence on the magnetic characteristics and the improvement of the inhibitors function by forming compounds, the above chemical composition may include the known optional elements as substitution for part of Fe. For instance, the optional elements as substitution for part of Fe may be the following elements.

Nb group element: 0.050% or less

The total amount of the Nb group element (at least one of Nb, V, Mo, Ta, and W) may be 0.050% or less. When the Nb group element (at least one of Nb, V, Mo, Ta, and W) is utilized as part of the inhibitor, and when the total amount of the Nb group element is 0.030% or less, the secondary recrystallization starts at appropriate timing, which is preferable. Moreover, the orientation of the formed secondary recrystallized grain becomes very favorable, and the microstructure is finally controlled to be favorable for the magnetization characteristics. In particular, Nb and Ta prominently shows the above effects, which is preferable. The lower limit of the total amount of the Nb group elements does not need to be limited, and the lower limit may be 0%. The lower limit is preferably 0.003%.

The total amount of the Nb group elements is more preferably 0.004 to 0.020%. The total amount is more preferably 0.005 to 0.010%.

Here, the total amount of the Nb group elements represents that at least one of Nb, V, Mo, Ta, and W is included and the amount thereof corresponds to the above total amount.

In addition, the slab may contain, as the optional element, by mass%, at least one of:

Cu: 0.40% or less,
Bi: 0.010% or less,
B: 0.080% or less,
P: 0.50% or less,
Ti: 0.015% or less,
Sn: 0.10% or less,
Sb: 0.10% or less,
Cr: 0.30% or less, and
Ni: 1.00% or less.

The optional elements may be contained according to a known purpose, a lower limit of the optional elements does not need to be limited, and the lower limit may be 0%.

The chemical composition of the slab may be measured by the above analytical methods, as with the chemical composition of the grain oriented electrical steel sheet as the final product.

(Hot Rolling Process)

**In** the hot rolling process, the slab is heated to a predetermined temperature (for instance, **1100** to 1400°C), and then, is subjected to hot rolling in order to obtain a hot rolled steel sheet. **In** the hot rolling process, for instance, the silicon steel material (slab) is heated in heating stage, is rough-rolled, and then, is final-rolled in order to obtain the hot rolled steel sheet with a predetermined thickness, for instance, 1.8 to 3.5 mm. After finishing the final rolling, the hot rolled steel sheet is coiled at a predetermined temperature.

In a case where of a process including the nitridation during decarburization annealing or after decarburization annealing, the inhibitor intensity as MnS is not necessarily needed, it is preferable that the slab heating temperature is 1100 to 1280°C from the productivity standpoint.

(Hot-Band Annealing Process)

In the hot band annealing process, the hot rolled steel sheet after the hot rolling process is annealed under predetermined conditions (for instance, 750 to 1200°C for 30 seconds to 10 minutes) in order to obtain a hot band annealed sheet. The hot-band annealing is generally performed to control the microstructure of the steel sheet such as the recrystallization fraction, the residual strain, and the grain size by annealing the hot-rolled steel sheet after the hot rolling process and to preferably control the morphology of precipitates in the steel. For instance, in high temperature slab heating process, the above process is to finally control the morphology of precipitates such as AlN, and the conditions are controlled so that the precipitates are uniformly and finely precipitated. For instance, as the hot band annealing, the steel sheet may be heated to 1050°C to 1150°C, may be slow-cooled to an intermediate temperature (850°C to 950°C) for 50 to 150 seconds in order to appropriately precipitates AlN and the like, and thereafter, may be water-cooled.

(Cold Rolling Process)

In the cold rolling process, the hot band annealed sheet after the hot band annealing process is cold-rolled once or is cold-rolled plural times (two times or more) with an annealing (intermediate annealing) (for instance, 80 to 95% of total cold reduction) in order to obtain a cold rolled steel sheet with a thickness, for instance, 0.10 to 0.50 mm. In order to improve the magnetic characteristics, for instance, an interpass temperature of the cold rolling may be approximately 100°C to 300°C.

The total cold reduction of cold rolling is defined as follows.

Total cold reduction (%) = ( 1 - Thickness of steel sheet after cold rolling / Thickness of steel sheet before cold rolling ) $\times$ 100

(Local Rapid Heating Process)

**In** the present embodiment, local rapid heating for forming the locally heated region is performed on the cold-rolled steel sheet after the cold rolling process. The rapid heating method is not particularly limited as long as the steel sheet can be locally heated. For instance, it is possible to adopt a method in which spot electrodes are arranged and contacted on both surfaces of the steel sheet and the steel sheet is heated by flowing a current in the steel sheet, a method in which the steel sheet is heated by irradiating the surface thereof with laser beam, electron beam, and the like, a method in which the steel sheet is locally heated by induction heating, a method in which the steel sheet is heated by contacting a heated piece, and the like. The size of each locally heated region may be a dotted region having a diameter of approximately 10 $\mu$m to 10 mm or a linear region having a width of approximately 10 $\mu$m to 10 mm. **In** addition, the electrode used for electric heating may be a circular electrode or a linear electrode as described above.

Note that regarding the size of the locally heated region, the minimum diameter and the minimum width depend on the shape of the spot electrode and the technique of reducing the focusing diameter of the laser beam or the electron beam. Although it is possible in principle to further reduce the size of the locally heated region, it is considered that the effect can be obtained when the size of the locally heated region is 1 $\mu$m or more in consideration of the fact that the nucleus of the recrystallized grain has a size of approximately 1 $\mu$m under the present conditions. From an industrial standpoint, the minimum diameter and the minimum width may be 10 $\mu$m or more. In addition, with respect to the size of the locally heated region, when the maximum diameter or the maximum width exceeds 10 mm, the area fraction of the Goss-oriented grains having relatively large angular deviation $\theta$ or angular deviation $\phi$ that cannot grow out of the locally heated region increases. In this case, it is difficult to obtain the effect of performing local rapid heating.

In the local rapid heating, the heating rate may be 500 °C/sec or more at a central position of the locally heated region as viewed in the thickness direction and at a thickness 1/5 position of the steel sheet. When the heating rate is 500 °C/sec or more at the above region, the microstructure of the locally heated region can be preferably controlled to a recovered structure or a recrystallized structure. The heating rate is preferably 2000 °C/sec or more, and more preferably 10000 °C/sec or more. On the other hand, the upper limit of the heating rate is not particularly limited, and the upper limit may be, for instance, 1000000 °C/sec.

In addition, it is preferable that the heating rate is controlled with the heating rate during decarburization annealing described below. For instance, it is difficult to obtain the intended effect when the heating rate during decarburization annealing is faster than the heating rate during local rapid heating. Therefore, although depending on the degree of the value of the heating rate, the heating rate during local rapid heating is preferably equal to or more than the heating rate during decarburization annealing.

Herein, the thickness 1/5 position of the steel sheet indicates a depth corresponding to 1/5 of the thickness of the steel sheet from the surface of the steel sheet along the thickness direction.

In addition, in the local rapid heating, the maximum attained temperature may be 700°C or more at the central position of the locally heated region as viewed in the thickness direction and at the thickness 1/5 position of the steel sheet. When the maximum attained temperature is 700°C or more in the above region, the microstructure of the locally heated region can be preferably controlled to the recovered structure or the recrystallized structure. The maximum attained temperature is preferably 800°C or higher, and more preferably 900°C or higher. On the other hand, the maximum attained temperature may be equal to or lower than the melting point of the steel sheet, and may be, for instance, 1400°C or lower.

In addition, in the local rapid heating, the holding time from reaching the maximum temperature until cooling to 700°C may be 0.1 seconds or more at the central position of the locally heated region as viewed in the thickness direction and at the thickness 1/5 position of the steel sheet. When the holding time is 0.1 seconds or more in the above region, the microstructure of the locally heated region can be preferably controlled to the recovered structure or the recrystallized structure. The holding time is preferably 0.2 seconds or more, more preferably 0.3 seconds or more, and still more preferably 0.4 seconds or more. On the other hand, the upper limit of the holding time is not particularly limited, and the upper limit may be, for instance, 10 seconds or less. The holding time from reaching the maximum temperature until cooling to 700°C has essentially affected the formation of the coarse Goss-oriented grains close to the ideal Goss orientation.

In the local rapid heating, it is important to control the above holding time in addition to the heating rate and the maximum attained temperature described above. During this holding time, it is possible to form a sub-grain structure or a recrystallized nucleus, which is advantageous for the formation of the coarse Goss-oriented grains in the locally heated region. By controlling the sub-grain structure in the locally heated region through the holding time, it is possible to preferably control the microstructure in the subsequent process.

As described above, the method of local rapid heating is not particularly limited. For instance, local rapid heating may be performed by spot electric heating, laser irradiation, or electron beam irradiation. Any local rapid heating method may be controlled so as to satisfy the heating rate, the maximum attained temperature, and the holding time described above. A person skilled in the art can combine the conditions of the local rapid heating, and thereby, can control the heating rate, maximum attained temperature, and holding time according to the purpose.

For instance, a person skilled in the art can control the heating rate and the maximum attained temperature at the central position of the locally heated region as viewed in the thickness direction and at the thickness 1/5 position of the steel sheet by performing thermal conductivity analysis using finite element method. Additionally, a person skilled in the art can control the above holding time by controlling conditions of heat dissipation after reaching the maximum temperature. For instance, in the case of spot electric heating, the electrode retention time after current flow may be controlled, or the shape of the spot electrode may be changed to a shape suitable for heat dissipation. In addition, in the case of laser irradiation or electron beam irradiation, the irradiation speed may be adjusted, or the shape of irradiated region may be changed to an ellipse and the like to add a gradient to the irradiation energy from the central region toward the outer edge region in irradiated region.

In general, in heating by laser irradiation, only the vicinity of the irradiated sheet surface is preferentially heated, and the inside of the steel sheet is hardly heated. In addition, since heating by laser irradiation is non-contact heating, heat dissipation after heating is fast, and it is difficult to hold the temperature. Therefore, when heating by laser irradiation is performed as the local rapid heating, in order to recover or recrystallize the cold-deformed structure in the laser-irradiated region, it is necessary to perform heating under a condition of heating not only the sheet surface but also the inside of the steel sheet and under a condition of relatively coarsening the sub-grain structure in the laser-irradiated region by slowing the cooling rate. The condition of laser irradiation for performing the local rapid heating is quite different from the condition of laser irradiation for performing the magnetic domain refinement. For instance, even if the condition of laser irradiation for performing magnetic domain refinement (usually 0.5 to 50 mJ/mm$^2$) is applied to the present embodiment, the microstructure of the locally heated region cannot be controlled in a preferable one, and the coarse Goss-oriented grains close to the ideal Goss orientation are not formed in the steel sheet after the decarburization annealing process. In addition, the situation with electron beam irradiation is the same as with laser irradiation. Even if the condition of electron beam irradiation for performing magnetic domain refinement is applied to the present embodiment, the microstructure of the locally heated region cannot be controlled in a preferable one, and the coarse Goss-oriented grains close to the ideal Goss orientation are not formed in the steel sheet after the decarburization annealing process.

Note that, even when the input power of laser irradiation or electron beam irradiation is simply increased, it is difficult to form the coarse Goss-oriented grains close to the ideal Goss orientation. For instance, when the rapid heating is performed by laser irradiation or electron beam irradiation, it is preferable to make the beam shape elliptical or control the scan speed and the like in order to secure a temperature range where the grains in the region grow after the rapid heating.

Conventionally, in an electrical steel sheet, laser irradiation and electron beam irradiation have been performed to reduce the iron loss by performing magnetic domain control on the steel sheet after secondary recrystallization. Under conditions of these laser irradiation and electron beam irradiation, since approximately 20 $\mu$m from the surface of the steel sheet is heated, heat dissipation after heating is fast. Therefore, under the conventional conditions, it is difficult to secure the holding time from reaching the maximum temperature until cooling to 700°C as described above. That is, under the conditions of conventional laser irradiation and electron beam irradiation, it may be possible to make the irradiated region act as a barrier for the growth of the secondary recrystallized grains, but it is difficult to form the coarse Goss-oriented grains having the orientation close to the ideal Goss orientation as in the present embodiment. In order to form the coarse Goss-oriented grains close to the ideal Goss orientation by laser irradiation or electron beam irradiation, it is necessary to investigate conditions of laser irradiation or electron beam irradiation as described above.

Moreover, at the time when the local heating affected regions are discretely arranged on the sheet surface by the local rapid heating, the locally heated regions may be appropriately arranged on the sheet surface, and thereby, the size, shape, and arrangement of the grains after the secondary annealing may be controlled. For instance, in a case where the locally heated regions are arranged on the sheet surface so that the Goss-oriented grain initiates to grow from one locally heated region and the grain growth stops when the grain encounters with another Goss-oriented grain which initiates to grow from an adjacent locally heated region, it is possible to control the grain size of the Goss-oriented grains after secondary recrystallization to be fine.

(Decarburization Annealing Process)

**In** the decarburization annealing process, the cold-rolled steel sheet after the local rapid heating process is subjected to decarburization annealing (primary annealing). By this decarburization annealing, the existence frequency of the Goss-oriented grains formed in the locally heated region is increased, the grain size of the Goss-oriented grains is increased, and the coarse Goss-oriented grains having the orientation close to the ideal Goss orientation are preferably grown.

As conditions of the decarburization annealing, for instance, the annealing temperature may be 700 to 900°C, and the annealing time may be 1 to 3 minutes. By performing decarburization annealing on the cold-rolled steel sheet, C included in the cold-rolled steel sheet is removed. **In** order to remove "C" included in the cold rolled steel sheet, it is preferable that the decarburization annealing is conducted in moist atmosphere.

In addition, it is effective to reduce the primary recrystallized grain size by controlling the conditions of the hot rolling and hot-band annealing described above and by decreasing the decarburization annealing temperature as necessary. The primary recrystallized grain size is not particularly limited but is preferably 8 to 30 $\mu$m.

In addition, in the present embodiment, the coarse Goss-oriented grains having the orientation close to the ideal Goss orientation are formed in the locally heated region. Therefore, it is not necessary to form the Goss-oriented grains again by decarburization annealing. The heating rate of the decarburization annealing may be 10000 °C/sec or less, but it is preferable to decrease the heating rate of the decarburization annealing in order to form {111}<112> oriented grains or {411}<148> oriented grains that are easily encroached in the matrix region (non-locally heated region). For instance, the heating rate of the decarburization annealing is preferably 300 °C/sec or less, more preferably 200 °C/sec or less, and still more preferably 100 °C/sec or less.

In addition, the amount of oxidation caused by the decarburization annealing and the state of surface oxidized layer affect the formation of the glass film. Therefore, in the decarburization annealing, the oxidation degree ($PH_2O/PH_2$) in the annealing atmosphere (furnace atmosphere) may be controlled as necessary.

(Nitridation)

Nitridation is a treatment effective in the low temperature slab heating process in which the slab heating temperature is 1280°C or lower, and is an important process for controlling the inhibitor intensity in secondary recrystallization. In the nitridation, the nitrogen content of the steel sheet is made to increase to 40 to 200 ppm from starting the decarburization annealing to starting the secondary recrystallization in the final annealing. For instance, the nitridation may be a treatment of annealing the steel sheet in an atmosphere containing a gas having a nitriding ability such as ammonia, a treatment of final-annealing the decarburization annealed steel sheet being applied an annealing separator containing a powder having a nitriding ability such as MnN and the like. The nitrogen content after the nitridation is preferably 130 to 350 ppm, and more preferably 150 to 250 ppm.

(Annealing Separator Applying Process)

In the annealing separator applying process, the decarburization-annealed steel sheet is applied an annealing separator to. For instance, as the annealing separator, it is possible to use an annealing separator mainly including MgO, an annealing separator mainly including $Al_2O_3$, and the like. The decarburization-annealed steel sheet after applying the annealing separator is coiled and is final-annealed in the subsequent final annealing process.

(Final Annealing Process)

In the final annealing process, the decarburization annealed steel sheet after applying the annealing separator is final-annealed so that the secondary recrystallization (secondary annealing) occurs. In the process, the secondary recrystallization proceeds under conditions such that the grain growth of the primary recrystallized grain is suppressed by the inhibitor. Thereby, the grains having the {110}<001> orientation are preferentially grown, and the magnetic flux density is drastically improved.

The heating rate in the heating stage of the final annealing process is not particularly limited. For instance, the heating may be performed at a heating rate of 3 to 20 °C/hour. Moreover, slow heating may be performed in a temperature range of 1000 to 1200°C during heating. For instance, the heating rate in the temperature range of 1000 to 1200°C during heating is preferably 3 to 12 °C/hour, more preferably 3 to 9 °C/hour, and preferably 3 to 7 °C/hour. Otherwise, holding may be performed by stopping heating once in the heating stage of the final annealing process in order to suppress a rapid decomposition of precipitates which act as pinning sites of the primary recrystallized grains. For instance, the heating may be stopped once in a temperature range of 1050 to 1100°C during heating, and the holding may be performed for 5 hours or more and 15 hours or less. For instance, the adjustment of the heating rate in the temperature range of secondary recrystallization influences a decomposition rate of the inhibitor, and thus, it is possible to improve the magnetic flux density.

After the heating stage of the final annealing process, as a holding stage (purification annealing), holding may be performed for 10 hours or more and 60 hours or less in a temperature range of 1000°C or more and 1300°C or less. The atmosphere during final annealing may be, for instance, a nitrogen atmosphere or a mixed atmosphere of nitrogen and hydrogen.

(Insulating Coating Forming Process)

According to the necessity, a coating solution including phosphoric acid or phosphate, chromic anhydride or chromate, and colloidal silica may be applied to the steel sheet after the final annealing, and may be baked (for instance, 350 to 1150°C for 5 to 300 seconds) to form the insulation coating.

(Others)

The grain oriented electrical steel sheet may be subjected to magnetic domain refinement for forming local minute strain or grooves by a known method such as laser, plasma, a mechanical method, or etching as necessary. However, in the grain oriented electrical steel sheet according to the present embodiment, coarsening of the secondary recrystallized grain size is suppressed even though the magnetic flux density is excellent, and thus, the magnetic domains are refined without performing magnetic domain refinement treatment.

Herein, in a case where the magnetic domain refinement treatment is performed, the local minute strain or grooves derived from the magnetic domain refinement treatment may become an irregular point at measuring the crystal orientation and the grain size. Thus, at the time of measuring the crystal orientation, it is preferable that the measurement point does not overlap the local minute strain or grooves.

Example 1

Hereinafter, the effects of the present invention are described in detail with reference to the following examples. However, the condition in the examples is an example condition employed to confirm the operability and the effects of the present invention, so that the present invention is not limited to the example condition. The present invention can employ various types of conditions as long as the conditions do not depart from the scope of the present invention and can achieve the object of the present invention.

Using slabs having adjusted chemical composition as materials, cold rolled steel sheets with chemical composition shown in Table 2A were manufactured. The chemical composition was measured by the above-mentioned methods. In Table 2, "-" indicates that the control and manufacturing conscious of content did not perform and thus, the content was not measured.

When the cold rolled steel sheets were manufactured, the slabs were heated to 1150°C, and then hot-rolled to obtain the hot rolled steel sheets having the thickness of 2.6 mm. The hot rolled steel sheets were subjected to the hot band annealing in which the annealing was conducted at 1100°C and then at 900°C, and then were pickled in order to remove the surface scale. The steel sheets were cold-rolled once or cold-rolled plural times with the intermediate annealing to obtain the cold rolled steel sheets having the final thickness of 0.22 mm.

The cold-rolled steel sheets were subjected to local rapid heating under conditions shown in Tables 3 to 6. For spot electric heating, copper electrodes having a diameter of 3 mm which corresponds to contact area with the steel sheet were used, and then, the heating rate, the maximum attained temperature, the holding time from reaching the maximum temperature until cooling to 700°C (holding time above 700°C) were respectively controlled by comprehensively adjusting the electrode shape other than the contact area with the steel sheet, the electrode force, the flowing current, the time of current flow, the electrode retention time after current flow, and the like. For laser heating, fiber laser was used, focusing spot diameter of laser beam in the rolling direction (specifically, diameter including 86% of laser output) was to be 30 $\mu$m (except for Test Nos. 62 and 63), and then, the heating rate, the maximum attained temperature, the holding time above 700°C were respectively controlled by comprehensively adjusting the energy density of laser irradiation, the laser scanning speed, the shape of laser irradiated region, and the like. A person skilled in the art can combine the conditions of the local rapid heating, and thereby, can control the heating rate, the maximum attained temperature, and the holding time above 700°C according to the purpose.

Note that, in Test No. 60, the laser beam was elongated along scanning direction, and thereby, the holding time from reaching the maximum temperature until cooling to 700°C was controlled to 0.2 seconds in the local rapid heating, in order to form the coarse Goss-oriented grains having the orientation close to the ideal Goss orientation in the locally heated region. In Test No. 61, the general condition of laser irradiation for performing the magnetic domain refinement was applied. In Test No. 62, the focusing spot diameter was 0.5mm, and the energy density of laser irradiation was 2.0 J/mm$^2$, in order to control the irradiated region of laser beam to be finally the grain boundary of the secondary recrystallization. In Test No. 63, the focusing spot diameter was 0.5mm, and the energy density of laser irradiation was 30.0 J/mm$^2$, in order to control the irradiated region of laser beam to be finally the grain boundary of the secondary recrystallization.

In the tables, "Not performed" of heating method of local rapid heating indicates that the local rapid heating was not performed. "Linear or Dotted" of local heating condition indicates the shape of the locally heated region on the surface of the cold-rolled steel sheet, and "Spacing in rolling direction" and "Spacing in width direction" of local heating condition indicates the spacing in the rolling direction and the transverse direction in which the locally heated regions were arranged on the surface of the cold-rolled steel sheet. The locally heated regions were uniformly arranged at even spacing in the rolling direction and the transverse direction. Herein, when the locally heated regions were arranged on the surface of the cold rolled steel sheet, the locally heated regions were arranged so that the distribution was not uneven.

The manufactured cold-rolled steel sheets were subjected to decarburization annealing under the conditions shown in Tables 3 to 6. Herein, in the decarburization annealing, the oxidation degree ($PH_2O/PH_2$) in the annealing atmosphere (furnace atmosphere) was 0.13.

The manufactured decarburization-annealed steel sheet was subjected to nitridation at 750°C in nitrogen-hydrogen-ammonia atmosphere, and the nitrogen content of the steel sheet was to be 220 ppm. Thereafter, the annealing separator including MgO as a main component was applied and the final annealing was performed. In the final annealing, the steel sheet was heated to 1000°C (or heated to 1070°C in a case of the following "step", ) at the heating rate of 15 °C/hour in a mixed atmosphere of hydrogen and nitrogen, and thereafter, heated to 1200°C under one of the following conditions. And then, the steel sheets were held at 1200°C - 20hour in a hydrogen atmosphere.

Normal: heated at 15 °C/hour from 1000°C to 1200°C.
Slow Heating 1: heated at 10 °C/hour from 1000°C to 1200°C.
Slow Heating: heated at 7.5 °C/hour from 1000°C to 1200°C.
Slow Heating 2: heated at 5.0 °C/hour from 1000°C to 1200°C.
Step: held for 10 hours at 1070°C.

For the steel sheet after the final annealing, the coating solution for forming insulation coating which mainly included the phosphate and the colloidal silica and which included the chromic anhydride as necessary was applied and baked to form the insulating coating.

For the obtained grain oriented electrical steel sheet, the chemical compositions of base steel sheet, the ave$\phi_L$ ($\phi$m), the value of 100 - 15 $\times$ ave$\phi_L$ (f ($\phi$m)), and the $D_L$10 (D10) were evaluated by the above-mentioned methods. The evaluation results are shown in Tables 7 to 11. In Table 11, "-" indicates that the control and manufacturing conscious of content did not perform and thus, the content was not measured.

Herein, for the measurement of the crystal orientation, the measurement line including at least 1000 measurement points with 1 mm spacing along the rolled direction (RD) was arranged, ten lines of the above measurement lines with 50 mm spacing in the transverse direction (TD) were arranged, and the crystal orientation was measured at the ten lines.

Moreover, for the manufactured grain oriented electrical steel sheet, various features were evaluated. The evaluation results are shown in Tables 7 to 11.

The magnetic characteristics of the grain oriented electrical steel sheet were measured based on the single sheet tester (SST) method regulated by JIS C 2556: 2015.

The samples of 20 sheets with a size of 100 mm $\times$ 500 mm for the single sheet tester were taken from the obtained grain oriented electrical steel sheets, and then, the single sheet test was performed. As the magnetic characteristics, the magnetic flux density $B_8$ (T) in the rolling direction of the steel sheet was measured under the condition such that the steel sheet was excited at 800 A/m. The magnetic flux density $B_8$ was judged to as acceptable or not based on the Si content of the steel sheet. For instance, it is known that the saturation magnetic flux density increases with a decrease in the Si content of the steel sheet and that the $B_8$ increases with the increase in the saturation magnetic flux density. Thus, for the steels A to Z in which the Si content of the steel sheet was 3.3 to 3.5%, when the $B_8$ was 1.930T or more, it was judged to as acceptable. For the steel AA in which the Si content of the steel sheet was 2.5%, when the $B_8$ was 1.960T or more, it was judged to as acceptable. For the steel AB in which the Si content of the steel sheet was 4.1%, when the $B_8$ was 1.890T or more, it was judged to as acceptable.

Moreover, as the magnetic characteristics, the iron loss $W_{17/50}$ (W/kg) which was defined as the power loss per unit weight (1 kg) of the steel sheet was measured under the conditions of 50 Hz of AC frequency and 1.7 T of excited magnetic flux density. When the $W_{17/50}$ was 0.79 W/kg, it was judged to as acceptable.

In the grain oriented electrical steel sheets which were the inventive examples among Nos. 1 to 66, $ave_{\phi L} \leq 4.0°$ and $D_L 10 \leq 100 - 15 \times ave_{\phi L}$ were satisfied. In these inventive examples, as the grain oriented electrical steel sheet, the magnetic flux density was excellent because the angular deviation in the rolling direction was controlled to be small and the iron loss was excellent without performing the magnetic domain control (magnetic domain refinement) because the grain size in the rolling direction was controlled to be fine. Thus, in these inventive examples, it was possible to reduce the negative effects caused by the conventional magnetic domain control (for instance, a deterioration of the transformer noise caused by laser irradiation for the magnetic domain control, a decrease in the magnetic flux density caused by groove formation, and the like).

On the other hand, in grain oriented electrical steel sheets which were the comparative examples among Nos. 1 to 66, at least one of $ave_{\phi L} \leq 4.0°$ and $D_L 10 \leq 100 - 15 \times ave_{\phi L}$ were not satisfied. In these comparative examples, excellent magnetic flux density or excellent iron loss was not obtained as the grain oriented electrical steel sheet.

[Table 2]

| STEEL TYPE | MANUFACTURING RESULTS | | | | | | | | | | | | | | | | | | | |
|---|---|---|---|---|---|---|---|---|---|---|---|---|---|---|---|---|---|---|---|---|
| | CHEMICAL COMPOSITION OF COLD ROLLED STEEL SHEET (IN UNITS OF mass%, BALANCE: Fe AND IMPURITIES) | | | | | | | | | | | | | | | | | | | |
| | C | Si | Mn | S | Se | Al | N | Nb | V | Mo | Ta | W | Cu | Bi | B | P | Ti | Sn | Sb | Cr | Ni |
| A | 0.06 | 3.4 | 0.10 | 0.006 | — | 0.026 | 0.008 | — | — | — | — | — | — | — | — | — | — | — | — | — | — |
| B | 0.06 | 3.4 | 0.10 | 0.006 | — | 0.026 | 0.008 | 0.005 | — | — | — | — | — | — | — | — | — | — | — | — | — |
| C | 0.06 | 3.4 | 0.12 | 0.006 | — | 0.032 | 0.008 | — | — | — | — | — | — | — | — | — | — | — | — | — | — |
| D | 0.06 | 3.4 | 0.08 | 0.006 | — | 0.025 | 0.008 | — | — | — | — | — | — | — | — | — | — | — | — | — | — |
| E | 0.06 | 3.4 | 0.10 | 0.006 | — | 0.026 | 0.008 | 0.001 | — | — | — | — | — | — | — | — | — | — | — | — | — |
| F | 0.06 | 3.4 | 0.10 | 0.006 | — | 0.026 | 0.008 | 0.003 | — | — | — | — | — | — | — | — | — | — | — | — | — |
| G | 0.06 | 3.4 | 0.10 | 0.006 | — | 0.026 | 0.008 | 0.010 | — | — | — | — | — | — | — | — | — | — | — | — | — |
| H | 0.06 | 3.4 | 0.10 | 0.006 | — | 0.026 | 0.008 | 0.020 | — | — | — | — | — | — | — | — | — | — | — | — | — |
| I | 0.06 | 3.4 | 0.10 | 0.006 | — | 0.026 | 0.008 | 0.030 | — | — | — | — | — | — | — | — | — | — | — | — | — |
| J | 0.06 | 3.4 | 0.10 | 0.006 | — | 0.026 | 0.008 | 0.050 | — | — | — | — | — | — | — | — | — | — | — | — | — |
| K | 0.06 | 3.4 | 0.10 | 0.006 | 0.001 | 0.026 | 0.008 | 0.005 | — | — | — | — | — | — | — | — | — | — | — | — | — |
| L | 0.06 | 3.4 | 0.10 | 0.006 | — | 0.026 | 0.008 | — | 0.007 | — | — | — | — | — | — | — | — | — | — | — | — |
| M | 0.06 | 3.4 | 0.10 | 0.006 | — | 0.026 | 0.008 | — | — | 0.020 | — | — | — | — | — | — | — | — | — | — | — |
| N | 0.06 | 3.4 | 0.10 | 0.006 | — | 0.026 | 0.008 | — | — | — | 0.003 | — | — | — | — | — | — | — | — | — | — |
| O | 0.06 | 3.4 | 0.10 | 0.006 | — | 0.026 | 0.008 | — | — | — | — | 0.010 | — | — | — | — | — | — | — | — | — |
| P | 0.05 | 3.3 | 0.10 | 0.007 | — | 0.026 | 0.008 | 0.005 | 0.003 | — | 0.003 | — | — | — | — | — | — | — | — | — | — |
| Q | 0.08 | 3.3 | 0.10 | 0.007 | — | 0.026 | 0.008 | 0.005 | — | — | — | — | 0.07 | — | — | — | — | — | — | — | — |
| R | 0.08 | 3.3 | 0.10 | 0.007 | — | 0.026 | 0.008 | 0.005 | — | — | — | — | 0.07 | 0.002 | — | — | — | — | — | — | — |
| S | 0.05 | 3.3 | 0.10 | 0.007 | — | 0.026 | 0.008 | 0.005 | — | — | — | — | 0.02 | — | 0.002 | — | — | — | — | — | — |
| T | 0.05 | 3.3 | 0.10 | 0.007 | — | 0.026 | 0.008 | 0.005 | — | — | — | — | 0.02 | — | — | 0.015 | — | — | — | — | — |
| U | 0.05 | 3.3 | 0.10 | 0.007 | — | 0.026 | 0.008 | 0.005 | — | — | — | — | 0.02 | — | — | — | 0.006 | — | — | — | — |
| V | 0.05 | 3.3 | 0.10 | 0.007 | — | 0.026 | 0.008 | 0.005 | — | — | — | — | 0.02 | — | — | — | — | 0.060 | — | — | — |
| W | 0.05 | 3.3 | 0.10 | 0.007 | — | 0.026 | 0.008 | 0.005 | — | — | — | — | 0.02 | — | — | — | — | — | 0.023 | — | — |
| X | 0.05 | 3.3 | 0.10 | 0.007 | — | 0.026 | 0.008 | 0.005 | — | — | — | — | 0.02 | — | — | — | — | — | — | 0.120 | — |
| Y | 0.06 | 3.5 | 0.10 | 0.006 | — | 0.026 | 0.008 | 0.005 | — | — | — | — | 0.20 | — | — | 0.021 | 0.002 | 0.060 | — | 0.100 | 0.030 |
| Z | 0.06 | 3.5 | 0.10 | 0.006 | — | 0.026 | 0.008 | — | — | — | — | — | 0.20 | — | — | — | — | — | — | — | — |
| AA | 0.04 | 2.5 | 0.10 | 0.008 | — | 0.024 | 0.007 | — | — | — | — | — | — | — | — | — | — | — | — | — | — |
| AB | 0.07 | 4.1 | 0.10 | 0.006 | — | 0.032 | 0.009 | 0.008 | 0.002 | — | — | — | 0.40 | — | — | 0.021 | 0.002 | 0.060 | — | 0.100 | 0.020 |

[Table 3]

| No. | STEEL TYPE | MANUFACTURING CONDITIONS | | | | | | | | | | |
|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME |
| | | | | | | | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 1 | A | 91.5 | NOT PERFORMED | - | - | - | - | - | - | 100 | 850 | 100 |
| 2 | A | 91.5 | SPOT ELECTRIC | 5000 | 900 | 0.3 | DOTTED | 160 | 30 | 100 | 850 | 100 |
| 3 | A | 91.5 | SPOT ELECTRIC | 5000 | 900 | 0.3 | DOTTED | 120 | 30 | 100 | 850 | 100 |
| 4 | A | 91.5 | SPOT ELECTRIC | 5000 | 900 | 0.3 | DOTTED | 80 | 30 | 100 | 850 | 100 |
| 5 | A | 91.5 | SPOT ELECTRIC | 5000 | 900 | 0.3 | DOTTED | 60 | 30 | 100 | 850 | 100 |
| 6 | A | 91.5 | SPOT ELECTRIC | 5000 | 900 | 0.3 | DOTTED | 50 | 30 | 100 | 850 | 100 |
| 7 | A | 91.5 | SPOT ELECTRIC | 5000 | 900 | 0.3 | DOTTED | 30 | 30 | 100 | 850 | 100 |
| 8 | A | 91.5 | SPOT ELECTRIC | 5000 | 900 | 0.3 | DOTTED | 15 | 30 | 100 | 850 | 100 |
| 9 | A | 91.5 | NOT PERFORMED | - | - | - | - | - | - | 100 | 850 | 100 |
| 10 | A | 91.5 | SPOT ELECTRIC | 5000 | 900 | 0.3 | DOTTED | 160 | 30 | 100 | 850 | 100 |
| 11 | A | 91.5 | SPOT ELECTRIC | 5000 | 900 | 0.3 | DOTTED | 120 | 30 | 100 | 850 | 100 |
| 12 | A | 91.5 | SPOT ELECTRIC | 5000 | 900 | 0.3 | DOTTED | 80 | 30 | 100 | 850 | 100 |

(continued)

| No. | STEEL TYPE | MANUFACTURING CONDITIONS | | | | | | | | | | |
|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME |
| | | | | | | | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 13 | A | 91.5 | SPOT ELECTRIC | 5000 | 900 | 0.3 | DOTTED | 60 | 30 | 100 | 850 | 100 |
| 14 | A | 91.5 | SPOT ELECTRIC | 5000 | 900 | 0.3 | DOTTED | 50 | 30 | 100 | 850 | 100 |
| 15 | A | 91.5 | SPOT ELECTRIC | 5000 | 900 | 0.3 | DOTTED | 30 | 30 | 100 | 850 | 100 |
| 16 | A | 91.5 | SPOT ELECTRIC | 5000 | 900 | 0.3 | DOTTED | 15 | 30 | 100 | 850 | 100 |

[Table 4]

| No. | STEEL TYPE | MANUFACTURING CONDITIONS | | | | | | | | DECARBURIZATION ANNEALING | | |
| | | TOTAL COLD REDUCTION OF COLD ROLLING | LOCAL RAPID HEATING | | | | LOCAL HEATING CONDITION | | | HEATING RATE | ANNEALING TEMPERATURE | ANNEALING TIME |
| | | | HEATING METHOD | HEATING RATE | MAXIMUM ATTAINED TEMPERATURE | HOLDING TIME ABOVE 700°C | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 17 | A | 91.5 | NOT PERFORMED | - | - | - | - | - | - | 100 | 850 | 100 |
| 18 | A | 91.5 | SPOT ELECTRIC | 5000 | 900 | 0.3 | DOTTED | 160 | 30 | 100 | 850 | 100 |
| 19 | A | 91.5 | SPOT ELECTRIC | 5000 | 900 | 0.3 | DOTTED | 120 | 30 | 100 | 850 | 100 |
| 20 | A | 91.5 | SPOT ELECTRIC | 5000 | 900 | 0.3 | DOTTED | 80 | 30 | 100 | 850 | 100 |
| 21 | A | 91.5 | SPOT ELECTRIC | 5000 | 900 | 0.3 | DOTTED | 60 | 30 | 100 | 850 | 100 |
| 22 | A | 91.5 | SPOT ELECTRIC | 5000 | 900 | 0.3 | DOTTED | 50 | 30 | 100 | 850 | 100 |
| 23 | A | 91.5 | SPOT ELECTRIC | 5000 | 900 | 0.3 | DOTTED | 30 | 30 | 100 | 850 | 100 |
| 24 | A | 91.5 | SPOT ELECTRIC | 5000 | 900 | 0.3 | DOTTED | 15 | 30 | 100 | 850 | 100 |
| 25 | A | 90.4 | NOT PERFORMED | - | - | - | - | - | - | 100 | 850 | 100 |
| 26 | A | 90.4 | SPOT ELECTRIC | 5000 | 900 | 0.3 | DOTTED | 20 | 20 | 100 | 850 | 100 |
| 27 | B | 90.4 | SPOT ELECTRIC | 5000 | 900 | 0.3 | DOTTED | 20 | 20 | 100 | 850 | 100 |
| 28 | C | 90.4 | SPOT ELECTRIC | 5000 | 900 | 0.3 | DOTTED | 20 | 20 | 100 | 850 | 100 |

| No. | STEEL TYPE | MANUFACTURING CONDITIONS | | | | | | | | | | |
|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME |
| | | | | | | | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 29 | D | 90.4 | SPOT ELECTRIC | 5000 | 900 | 0.3 | DOTTED | 20 | 20 | 100 | 850 | 100 |
| 30 | E | 90.4 | SPOT ELECTRIC | 5000 | 900 | 0.3 | DOTTED | 20 | 20 | 100 | 850 | 100 |
| 31 | F | 90.4 | SPOT ELECTRIC | 5000 | 900 | 0.3 | DOTTED | 20 | 20 | 100 | 850 | 100 |
| 32 | G | 90.4 | SPOT ELECTRIC | 5000 | 900 | 0.3 | DOTTED | 20 | 20 | 100 | 850 | 100 |
| 33 | H | 90.4 | SPOT ELECTRIC | 5000 | 900 | 0.3 | DOTTED | 20 | 20 | 100 | 850 | 100 |

[Table 5]

| No. | STEEL TYPE | MANUFACTURING CONDITIONS | | | | | | | | DECARBURIZATION ANNEALING | | |
| | | TOTAL COLD REDUCTION OF COLD ROLLING | LOCAL RAPID HEATING | | | | LOCAL HEATING CONDITION | | | HEATING RATE | ANNEALING TEMPERATURE | ANNEALING TIME |
| | | | HEATING METHOD | HEATING RATE | MAXIMUM ATTAINED TEMPERATURE | HOLDING TIME ABOVE 700°C | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 34 | I | 90.4 | SPOT ELECTRIC | 5000 | 900 | 0.3 | DOTTED | 20 | 20 | 100 | 850 | 100 |
| 35 | J | 90.4 | SPOT ELECTRIC | 5000 | 900 | 0.3 | DOTTED | 20 | 20 | 100 | 850 | 100 |
| 36 | K | 90.4 | SPOT ELECTRIC | 5000 | 900 | 0.3 | DOTTED | 20 | 20 | 100 | 850 | 100 |
| 37 | L | 90.4 | SPOT ELECTRIC | 5000 | 900 | 0.3 | DOTTED | 20 | 20 | 100 | 850 | 100 |
| 38 | M | 90.4 | SPOT ELECTRIC | 5000 | 900 | 0.3 | DOTTED | 20 | 20 | 100 | 850 | 100 |
| 39 | N | 90.4 | SPOT ELECTRIC | 5000 | 900 | 0.3 | DOTTED | 20 | 20 | 100 | 850 | 100 |
| 40 | O | 90.4 | SPOT ELECTRIC | 5000 | 900 | 0.3 | DOTTED | 20 | 20 | 100 | 850 | 100 |
| 41 | P | 90.4 | SPOT ELECTRIC | 5000 | 900 | 0.3 | DOTTED | 20 | 20 | 100 | 850 | 100 |
| 42 | Q | 90.4 | SPOT ELECTRIC | 5000 | 900 | 0.3 | DOTTED | 20 | 20 | 100 | 850 | 100 |
| 43 | R | 90.4 | SPOT ELECTRIC | 5000 | 900 | 0.3 | DOTTED | 20 | 20 | 100 | 850 | 100 |
| 44 | S | 90.4 | SPOT ELECTRIC | 5000 | 900 | 0.3 | DOTTED | 20 | 20 | 100 | 850 | 100 |
| 45 | T | 90.4 | SPOT ELECTRIC | 5000 | 900 | 0.3 | DOTTED | 20 | 20 | 100 | 850 | 100 |

| No. | STEEL TYPE | MANUFACTURING CONDITIONS | | | | | | | | | | |
|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME |
| | | | | | | | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 46 | U | 90.4 | SPOT ELECTRIC | 5000 | 900 | 0.3 | DOTTED | 20 | 20 | 100 | 850 | 100 |
| 47 | V | 90.4 | SPOT ELECTRIC | 5000 | 900 | 0.3 | DOTTED | 20 | 20 | 100 | 850 | 100 |
| 48 | W | 90.4 | SPOT ELECTRIC | 5000 | 900 | 0.3 | DOTTED | 20 | 20 | 100 | 850 | 100 |
| 49 | X | 90.4 | SPOT ELECTRIC | 5000 | 900 | 0.3 | DOTTED | 20 | 20 | 100 | 850 | 100 |
| 50 | Y | 90.4 | SPOT ELECTRIC | 5000 | 900 | 0.3 | DOTTED | 20 | 20 | 100 | 850 | 100 |

[Table 6]

| No. | STEEL TYPE | MANUFACTURING CONDITIONS | | | | | | | | | | |
|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME |
| | | | | | | | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 51 | Z | 90.4 | SPOT ELECTRIC | 5000 | 900 | 0.3 | DOTTED | 20 | 20 | 100 | 850 | 100 |
| 52 | AA | 92.1 | NOT PERFORMED | - | - | - | - | - | - | 100 | 850 | 100 |
| 53 | AB | 89.0 | NOT PERFORMED | - | - | - | - | - | - | 100 | 850 | 100 |
| 54 | AA | 92.1 | SPOT ELECTRIC | 5000 | 900 | 0.3 | DOTTED | 30 | 30 | 100 | 850 | 100 |
| 55 | AB | 89.0 | SPOT ELECTRIC | 5000 | 900 | 0.3 | DOTTED | 30 | 30 | 100 | 850 | 100 |
| 56 | A | 91.5 | SPOT ELECTRIC | 5000 | 900 | 0.3 | DOTTED | 30 | 30 | 100 | 850 | 100 |
| 57 | A | 91.5 | SPOT ELECTRIC | 5000 | 900 | 0.2 | DOTTED | 30 | 30 | 100 | 850 | 100 |
| 58 | A | 91.5 | SPOT ELECTRIC | 5000 | 900 | 0.1 | DOTTED | 30 | 30 | 100 | 850 | 100 |
| 59 | A | 91.5 | SPOT ELECTRIC | 5000 | 900 | 0.03 | DOTTED | 30 | 30 | 100 | 850 | 100 |
| 60 | A | 90.4 | LASER | 2000 | 800 | *0.2* | LINEAR | 10 | - | 300 | 830 | 90 |
| 61 | A | 90.4 | LASER | < 2000 | < 200 | < 0.03 | LINEAR | 10 | - | 300 | 830 | 90 |
| 62 | A | 90.4 | LASER | 5000 | 800 | < 0.03 | LINEAR | 10 | - | 300 | 830 | 90 |
| 63 | A | 90.4 | LASER | 7000 | 800 | < 0.03 | LINEAR | 10 | - | 300 | 830 | 90 |
| 64 | A | 90.4 | SPOT ELECTRIC | 500 | 900 | 0.3 | DOTTED | 20 | 20 | 100 | 850 | 90 |

(continued)

| No. | STEEL TYPE | MANUFACTURING CONDITIONS | | | | | | | | | | |
| --- | --- | --- | --- | --- | --- | --- | --- | --- | --- | --- | --- | --- |
| | | TOTAL COLD REDUCTION OF COLD ROLLING | LOCAL RAPID HEATING | | | | | | | DECARBURIZATION ANNEALING | | |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME |
| | | | | | | | LINEAR OR DOTTED | SPACING IN ROLLING DIRECTION | SPACING IN WIDTH DIRECTION | | | |
| | | % | | °C/sec | °C | sec | | mm | mm | °C/sec | °C | sec |
| 65 | A | 90.4 | SPOT ELECTRIC | 2000 | 900 | 0.3 | DOTTED | 20 | 20 | 100 | 850 | 90 |
| 66 | A | 90.4 | SPOT ELECTRIC | 10000 | 900 | 0.3 | DOTTED | 20 | 20 | 100 | 850 | 90 |

[Table 8]

| No. | STEEL TYPE | MANUFACTURING CONDITIONS | | | MANUFACTURING RESULTS | | | EVALUATION RESULTS | | NOTE |
|---|---|---|---|---|---|---|---|---|---|---|
| | | FINAL ANNEALING HEATING STAGE | | | ave $\phi_L$ | VALUE OF (100 - 15 × ave$\phi_L$) | $D_L10$ | MAGNETIC FLUX DENSITY $B_8$ | IRON LOSS W17/50 | |
| | | ANNEALING METHOD | HEATING RATE TO 1000°C | HEATING RATE TO 1200°C | | | | | | |
| | | | °C/hr | °C/hr | unit: ° | | mm | T | W/kg | |
| 1 | A | NORMAL | 15 | 15 | 4.7 | 29.1 | 30.0 | 1.911 | 0.839 | COMPARATIVE EXAMPLE |
| 2 | A | NORMAL | 15 | 15 | 4.2 | 37.6 | 38.6 | 1.926 | 0.833 | COMPARATIVE EXAMPLE |
| 3 | A | NORMAL | 15 | 15 | 4.0 | 39.3 | 41.5 | 1.929 | 0.820 | COMPARATIVE EXAMPLE |
| 4 | A | NORMAL | 15 | 15 | 3.8 | 42.7 | 44.4 | 1.935 | 0.797 | COMPARATIVE EXAMPLE |
| 5 | A | NORMAL | 15 | 15 | 3.7 | 43.8 | 37.4 | 1.937 | 0.789 | INVENTIVE EXAMPLE |
| 6 | A | NORMAL | 15 | 15 | 3.7 | 44.4 | 33.8 | 1.938 | 0.784 | INVENTIVE EXAMPLE |
| 7 | A | NORMAL | 15 | 15 | 3.6 | 45.5 | 26.8 | 1.940 | 0.755 | INVENTIVE EXAMPLE |
| 8 | A | NORMAL | 15 | 15 | 3.5 | 47.2 | 21.5 | 1.943 | 0.729 | INVENTIVE EXAMPLE |
| 9 | A | SLOW HEATING | 15 | 7.5 | 4.3 | 35.4 | 41.3 | 1.922 | 0.828 | COMPARATIVE EXAMPLE |
| 10 | A | SLOW HEATING | 15 | 7.5 | 3.7 | 43.8 | 53.5 | 1.937 | 0.811 | COMPARATIVE EXAMPLE |
| 11 | A | SLOW HEATING | 15 | 7.5 | 3.6 | 45.5 | 57.6 | 1.940 | 0.798 | COMPARATIVE EXAMPLE |
| 12 | A | SLOW HEATING | 15 | 7.5 | 3.4 | 48.9 | 47.5 | 1.946 | 0.775 | INVENTIVE EXAMPLE |
| 13 | A | SLOW HEATING | 15 | 7.5 | 3.3 | 50.1 | 40.0 | 1.948 | 0.767 | INVENTIVE EXAMPLE |
| 14 | A | SLOW HEATING | 15 | 7.5 | 3.3 | 50.6 | 36.3 | 1.949 | 0.762 | INVENTIVE EXAMPLE |
| 15 | A | SLOW HEATING | 15 | 7.5 | 3.2 | 51.8 | 28.8 | 1.951 | 0.733 | INVENTIVE EXAMPLE |
| 16 | A | SLOW HEATING | 15 | 7.5 | 3.1 | 53.5 | 23.3 | 1.954 | 0.707 | INVENTIVE EXAMPLE |

[Table 9]

| No. | STEEL TYPE | MANUFACTURING CONDITIONS | | | MANUFACTURING RESULTS | | | EVALUATION RESULTS | | NOTE |
|---|---|---|---|---|---|---|---|---|---|---|
| | | FINAL ANNEALING | | | ave $\phi_L$ | VALUE OF (100 - 15 × ave$\phi_L$) | $D_L$10 | MAGNETIC FLUX DENSITY $B_8$ | IRON LOSS W17/50 | |
| | | HEATING STAGE | | | | | | | | |
| | | ANNEALING METHOD | HEATING RATE TO 1000°C °C/hr | HEATING RATE TO 1200°C °C/hr | unit: ° | | mm | T | W/kg | |
| 17 | A | Step | 15 | 15 | 3.6 | 46.1 | 59.5 | 1.941 | 0.814 | COMPARATIVE EXAMPLE |
| 18 | A | Step | 15 | 15 | 3.0 | 55.7 | 84.9 | 1.958 | 0.834 | COMPARATIVE EXAMPLE |
| 19 | A | Step | 15 | 15 | 2.7 | 59.1 | 70.2 | 1.964 | 0.807 | COMPARATIVE EXAMPLE |
| 20 | A | Step | 15 | 15 | 2.5 | 62.0 | 55.3 | 1.969 | 0.761 | INVENTIVE EXAMPLE |
| 21 | A | Step | 15 | 15 | 2.5 | 63.1 | 47.8 | 1.971 | 0.728 | INVENTIVE EXAMPLE |
| 22 | A | Step | 15 | 15 | 2.4 | 63.7 | 44.1 | 1.972 | 0.712 | INVENTIVE EXAMPLE |
| 23 | A | Step | 15 | 15 | 2.4 | 64.2 | 36.6 | 1.973 | 0.679 | INVENTIVE EXAMPLE |
| 24 | A | Step | 15 | 15 | 2.3 | 64.8 | 31.0 | 1.974 | 0.648 | INVENTIVE EXAMPLE |
| 25 | A | SLOW HEATING 1 | 15 | 10 | 4.7 | 29.5 | 37.1 | 1.913 | 0.826 | COMPARATIVE EXAMPLE |
| 26 | A | SLOW HEATING 1 | 15 | 10 | 3.4 | 49.1 | 21.5 | 1.946 | 0.693 | INVENTIVE EXAMPLE |
| 27 | B | SLOW HEATING 1 | 15 | 10 | 2.5 | 61.9 | 27.7 | 1.969 | 0.651 | INVENTIVE EXAMPLE |
| 28 | C | SLOW HEATING 1 | 15 | 10 | 3.3 | 51.2 | 23.9 | 1.950 | 0.680 | INVENTIVE EXAMPLE |
| 29 | D | SLOW HEATING 1 | 15 | 10 | 3.3 | 50.3 | 22.7 | 1.948 | 0.685 | INVENTIVE EXAMPLE |
| 30 | E | SLOW HEATING 1 | 15 | 10 | 3.4 | 48.9 | 21.7 | 1.946 | 0.696 | INVENTIVE EXAMPLE |
| 31 | F | SLOW HEATING 1 | 15 | 10 | 3.0 | 55.5 | 25.3 | 1.957 | 0.674 | INVENTIVE EXAMPLE |
| 32 | G | SLOW HEATING 1 | 15 | 10 | 2.6 | 60.6 | 26.6 | 1.966 | 0.657 | INVENTIVE EXAMPLE |
| 33 | H | SLOW HEATING 1 | 15 | 10 | 2.8 | 58.4 | 25.3 | 1.963 | 0.675 | INVENTIVE EXAMPLE |

[Table 10]

| No. | STEEL TYPE | MANUFACTURING CONDITIONS | | | MANUFACTURING RESULTS | | | EVALUATION RESULTS | | NOTE |
|---|---|---|---|---|---|---|---|---|---|---|
| | | FINAL ANNEALING | | | ave $\phi_L$ | VALUE OF (100 - | $D_L$ 10 | MAGNETIC FLUX DENSITY | IRON LOSS W17/50 | |
| | | HEATING STAGE | | | | | | | | |
| | | ANNEALING METHOD | HEATING RATE TO 1000°C °C/hr | HEATING RATE TO 1200°C °C/hr | unit: ° | 15 × ave$\phi_L$) | mm | $B_8$ T | W/kg | |
| 34 | I | SLOW HEATING 1 | 15 | 10 | 3.0 | 54.7 | 25.1 | 1.956 | 0.688 | INVENTIVE EXAMPLE |
| 35 | J | SLOW HEATING 1 | 15 | 10 | 3.3 | 51.1 | 22.8 | 1.950 | 0.698 | INVENTIVE EXAMPLE |
| 36 | K | SLOW HEATING 1 | 15 | 10 | 2.6 | 61.1 | 24.9 | 1.967 | 0.654 | INVENTIVE EXAMPLE |
| 37 | L | SLOW HEATING 1 | 15 | 10 | 3.0 | 55.6 | 23.2 | 1.958 | 0.675 | INVENTIVE EXAMPLE |
| 38 | M | SLOW HEATING 1 | 15 | 10 | 2.8 | 57.6 | 24.7 | 1.961 | 0.687 | INVENTIVE EXAMPLE |
| 39 | N | SLOW HEATING 1 | 15 | 10 | 2.6 | 61.4 | 25.1 | 1.968 | 0.656 | INVENTIVE EXAMPLE |
| 40 | O | SLOW HEATING 1 | 15 | 10 | 3.1 | 52.9 | 23.0 | 1.953 | 0.678 | INVENTIVE EXAMPLE |
| 41 | P | SLOW HEATING 1 | 15 | 10 | 3.2 | 51.6 | 22.1 | 1.950 | 0.685 | INVENTIVE EXAMPLE |
| 42 | Q | SLOW HEATING 1 | 15 | 10 | 3.3 | 50.0 | 20.9 | 1.948 | 0.687 | INVENTIVE EXAMPLE |
| 43 | R | SLOW HEATING 1 | 15 | 10 | 3.4 | 48.8 | 20.4 | 1.946 | 0.702 | INVENTIVE EXAMPLE |
| 44 | S | SLOW HEATING 1 | 15 | 10 | 2.9 | 56.2 | 24.3 | 1.959 | 0.671 | INVENTIVE EXAMPLE |
| 45 | T | SLOW HEATING 1 | 15 | 10 | 3.3 | 50.8 | 22.5 | 1.949 | 0.683 | INVENTIVE EXAMPLE |
| 46 | U | SLOW HEATING 1 | 15 | 10 | 3.4 | 48.9 | 21.4 | 1.946 | 0.697 | INVENTIVE EXAMPLE |
| 47 | V | SLOW HEATING 1 | 15 | 10 | 3.4 | 49.7 | 21.8 | 1.947 | 0.690 | INVENTIVE EXAMPLE |
| 48 | W | SLOW HEATING 1 | 15 | 10 | 3.3 | 50.4 | 21.2 | 1.948 | 0.686 | INVENTIVE EXAMPLE |
| 49 | X | SLOW HEATING 1 | 15 | 10 | 3.3 | 50.8 | 22.3 | 1.949 | 0.684 | INVENTIVE EXAMPLE |
| 50 | Y | SLOW HEATING 1 | 15 | 10 | 2.8 | 58.0 | 23.9 | 1.962 | 0.631 | INVENTIVE EXAMPLE |

[Table 10]

| No. | STEEL TYPE | MANUFACTURING CONDITIONS | | | MANUFACTURING RESULTS | | | EVALUATION RESULTS | | NOTE |
|---|---|---|---|---|---|---|---|---|---|---|
| | | FINAL ANNEALING | | | ave $\phi_L$ | VALUE OF (100 - 15 × ave$\phi_L$) | $D_L10$ | MAGNETIC FLUX DENSITY | IRON LOSS W17/50 | |
| | | HEATING STAGE | | | | | | | | |
| | | ANNEALING METHOD | HEATING RATE TO 1000°C °C/hr | HEATING RATE TO 1200°C °C/hr | unit: ° | | mm | $B_8$ T | W/kg | |
| 51 | Z | SLOW HEATING 1 | 15 | 10 | 3.6 | 46.5 | 20.8 | 1.941 | 0.677 | INVENTIVE EXAMPLE |
| 52 | AA | SLOW HEATING 2 | 15 | 5 | 4.4 | 33.4 | 44.7 | 1.953 | 0.887 | COMPARATIVE EXAMPLE |
| 53 | AB | SLOW HEATING 2 | 15 | 5 | 4.3 | 34.8 | 45.8 | 1.875 | 0.798 | COMPARATIVE EXAMPLE |
| 54 | AA | SLOW HEATING 2 | 15 | 5 | 3.5 | 47.5 | 24.2 | 1.977 | 0.765 | INVENTIVE EXAMPLE |
| 55 | AB | SLOW HEATING 2 | 15 | 5 | 2.6 | 61.0 | 38.1 | 1.925 | 0.662 | INVENTIVE EXAMPLE |
| 56 | A | NORMAL | 15 | 15 | 3.6 | 45.5 | 26.8 | 1.940 | 0.755 | INVENTIVE EXAMPLE |
| 57 | A | NORMAL | 15 | 15 | 3.8 | 43.3 | 25.7 | 1.936 | 0.765 | INVENTIVE EXAMPLE |
| 58 | A | NORMAL | 15 | 15 | 4.0 | 40.5 | 24.5 | 1.931 | 0.773 | INVENTIVE EXAMPLE |
| 59 | A | NORMAL | 15 | 15 | 4.6 | 31.4 | 22.4 | 1.915 | 0.812 | COMPARATIVE EXAMPLE |
| 60 | A | SLOW HEATING 1 | 15 | 10 | 3.7 | 44.4 | 15.5 | 1.938 | 0.674 | INVENTIVE EXAMPLE |
| 61 | A | SLOW HEATING 1 | 15 | 10 | 4.8 | 28.0 | 34.4 | 1.909 | 0.841 | COMPARATIVE EXAMPLE |
| 62 | A | SLOW HEATING 1 | 15 | 10 | 4.7 | 29.1 | 24.2 | 1.911 | 0.822 | COMPARATIVE EXAMPLE |
| 63 | A | SLOW HEATING 1 | 15 | 10 | 4.8 | 28.6 | 27.4 | 1.910 | 0.814 | COMPARATIVE EXAMPLE |
| 64 | A | SLOW HEATING 1 | 15 | 10 | 3.7 | 45.0 | 38.2 | 1.939 | 0.754 | INVENTIVE EXAMPLE |
| 65 | A | SLOW HEATING 1 | 15 | 10 | 3.5 | 47.2 | 34.3 | 1.943 | 0.722 | INVENTIVE EXAMPLE |
| 66 | A | SLOW HEATING 1 | 15 | 10 | 3.2 | 51.8 | 39.1 | 1.951 | 0.681 | INVENTIVE EXAMPLE |

[Table 11]

STEEL MANUFACTURING RESULTS

CHEMICAL COMPOSITION OF BASE STEEL SHEET OF GRAIN ORIENTED ELECTRICAL STEEL SHEET (IN UNITS OF mass%, BALANCE: Fe AND IMPURITIES)

| STEEL TYPE | C | Si | Mn | S | Se | Al | N | Nb | V | Mo | Ta | W | Cu | Bi | B | P | Ti | Sn | Sb | Cr | Ni |
|---|---|---|---|---|---|---|---|---|---|---|---|---|---|---|---|---|---|---|---|---|---|
| A | 0.001 | 3.3 | 0.10 | <0.002 | — | <0.004 | <0.002 | — | — | — | — | — | — | — | — | — | — | — | — | — | — |
| B | 0.001 | 3.3 | 0.10 | <0.002 | — | <0.004 | <0.002 | 0.005 | — | — | — | — | — | — | — | — | — | — | — | — | — |
| C | 0.001 | 3.3 | 0.12 | <0.002 | — | <0.004 | <0.002 | — | — | — | — | — | — | — | — | — | — | — | — | — | — |
| D | 0.001 | 3.3 | 0.08 | <0.002 | — | <0.004 | <0.002 | — | — | — | — | — | — | — | — | — | — | — | — | — | — |
| E | 0.001 | 3.3 | 0.10 | <0.002 | — | <0.004 | <0.002 | 0.001 | — | — | — | — | — | — | — | — | — | — | — | — | — |
| F | 0.001 | 3.3 | 0.10 | <0.002 | — | <0.004 | <0.002 | 0.003 | — | — | — | — | — | — | — | — | — | — | — | — | — |
| G | 0.001 | 3.3 | 0.10 | <0.002 | — | <0.004 | <0.002 | 0.010 | — | — | — | — | — | — | — | — | — | — | — | — | — |
| H | 0.001 | 3.3 | 0.10 | <0.002 | — | <0.004 | <0.002 | 0.020 | — | — | — | — | — | — | — | — | — | — | — | — | — |
| I | 0.001 | 3.3 | 0.10 | <0.002 | — | <0.004 | <0.002 | 0.030 | — | — | — | — | — | — | — | — | — | — | — | — | — |
| J | 0.001 | 3.3 | 0.10 | <0.002 | — | <0.004 | <0.002 | 0.050 | — | — | — | — | — | — | — | — | — | — | — | — | — |
| K | 0.001 | 3.3 | 0.10 | <0.002 | 0.001 | <0.004 | <0.002 | 0.005 | — | — | — | — | — | — | — | — | — | — | — | — | — |
| L | 0.001 | 3.3 | 0.10 | <0.002 | — | <0.004 | <0.002 | — | 0.007 | — | — | — | — | — | — | — | — | — | — | — | — |
| M | 0.001 | 3.3 | 0.10 | <0.002 | — | <0.004 | <0.002 | — | — | 0.020 | — | — | — | — | — | — | — | — | — | — | — |
| N | 0.001 | 3.3 | 0.10 | <0.002 | — | <0.004 | <0.002 | — | — | — | 0.003 | — | — | — | — | — | — | — | — | — | — |
| O | 0.001 | 3.3 | 0.10 | <0.002 | — | <0.004 | <0.002 | — | — | — | — | 0.010 | — | — | — | — | — | — | — | — | — |
| P | 0.001 | 3.2 | 0.10 | <0.002 | — | <0.004 | <0.002 | 0.005 | 0.003 | — | 0.003 | — | — | — | — | — | — | — | — | — | — |
| Q | 0.001 | 3.2 | 0.10 | <0.002 | — | <0.004 | <0.002 | 0.005 | — | — | — | — | 0.07 | — | — | — | — | — | — | — | — |
| R | 0.001 | 3.2 | 0.10 | <0.002 | — | <0.004 | <0.002 | 0.005 | — | — | — | — | 0.07 | 0.002 | — | — | — | — | — | — | — |
| S | 0.001 | 3.2 | 0.10 | <0.002 | — | <0.004 | <0.002 | 0.005 | — | — | — | — | 0.02 | — | 0.002 | — | — | — | — | — | — |
| T | 0.001 | 3.2 | 0.10 | <0.002 | — | <0.004 | <0.002 | 0.005 | — | — | — | — | 0.02 | — | — | 0.015 | — | — | — | — | — |
| U | 0.001 | 3.2 | 0.10 | <0.002 | — | <0.004 | <0.002 | 0.005 | — | — | — | — | 0.02 | — | — | — | 0.006 | — | — | — | — |
| V | 0.001 | 3.2 | 0.10 | <0.002 | — | <0.004 | <0.002 | 0.005 | — | — | — | — | 0.02 | — | — | — | — | 0.060 | — | — | — |
| W | 0.001 | 3.2 | 0.10 | <0.002 | — | <0.004 | <0.002 | 0.005 | — | — | — | — | 0.02 | — | — | — | — | — | 0.023 | — | — |
| X | 0.001 | 3.2 | 0.10 | <0.002 | — | <0.004 | <0.002 | 0.005 | — | — | — | — | 0.02 | — | — | — | — | — | — | 0.120 | — |
| Y | 0.001 | 3.5 | 0.10 | <0.002 | — | <0.004 | <0.002 | 0.005 | — | — | — | — | 0.20 | — | — | 0.021 | 0.002 | 0.060 | — | 0.100 | 0.030 |
| Z | 0.001 | 3.4 | 0.10 | <0.002 | — | <0.004 | <0.002 | — | — | — | — | — | 0.20 | — | — | — | — | — | — | — | — |
| AA | 0.001 | 2.5 | 0.10 | <0.002 | — | <0.004 | <0.002 | — | — | — | — | — | — | — | — | — | — | — | — | — | — |
| AB | 0.001 | 4.1 | 0.10 | <0.002 | — | <0.004 | <0.002 | 0.008 | 0.002 | — | — | — | 0.40 | — | — | 0.021 | 0.002 | 0.060 | — | 0.100 | 0.020 |

INDUSTRIAL APPLICABILITY

According to the above aspects of the present invention, it is possible to provide the grain oriented electrical steel sheet in which it is possible to reduce the negative effects caused by the conventional magnetic domain control (for instance, a deterioration of the transformer noise caused by laser irradiation for the magnetic domain control, a decrease in the magnetic flux density caused by groove formation, and the like), while also obtaining excellent magnetic flux density and iron loss. Accordingly, the present invention has significant industrial applicability.

REFERENCE SIGNS LIST

1   Steel sheet
2   Measurement point for crystal orientation

**Claims**

1. A grain oriented electrical steel sheet,

   wherein: when a deviation angle from an ideal Goss orientation based on a rotation axis parallel to a normal direction Z is defined as $\alpha$; when a deviation angle from the ideal Goss orientation based on a rotation axis parallel to a transverse direction C is defined as $\beta$; when a deviation angle from the ideal Goss orientation based on a rotation axis parallel to a rolling direction L is defined as $\gamma$; when a deviation angle of a crystal orientation measured at a measurement point on a sheet surface is represented as $(\alpha\ \beta\ \gamma)$; when an angular deviation at the measurement point is defined as $\phi = (\alpha^2 + \beta^2)^{1/2}$; and when an average of the angular deviation $\phi$ obtained from at least 1000 measurement points with spacing of 1 mm in the rolling direction L is defined as $ave_{\phi_L}$, the $ave_{\phi_L}$ satisfies $ave_{\phi_L} \leq 4.0°$, and
   wherein: when deviation angles of crystal orientations measured at two measurement points which are adjacent on the sheet surface and which have spacing of 1 mm are represented as $(\alpha_1\ \beta_1\ \gamma_1)$ and $(\alpha_2\ \beta_2\ \gamma_2)$; when a midpoint of two measurement points which satisfy $[(\alpha_2 - \alpha_1)^2 + (\beta_2 - \beta_1)^2 + (\gamma_2 - \gamma_1)^2]^{1/2} \geq 1.0°$ is defined as a grain boundary GB; when a grain size in the rolling direction L obtained based on the grain boundary GB is defined as $D_L$ in units of mm; and when a grain size which is at 10% by number base from largest in a case where the grain sizes $D_L$ obtained in the rolling direction L are sorted from largest to smallest is defined as $D_L 10$ in units of mm, the $D_L 10$ satisfies $D_L 10 \leq 100 - 15 \times ave_{\phi_L}$.

# FIG. 1

# FIG. 2

## INTERNATIONAL SEARCH REPORT

| International application No. |
| --- |
| **PCT/JP2024/023281** |

**A. CLASSIFICATION OF SUBJECT MATTER**

*C22C 38/00*(2006.01)i; *C21D 8/12*(2006.01)i; *C22C 38/60*(2006.01)i; *H01F 1/147*(2006.01)i
FI: C22C38/00 303U; C22C38/60; H01F1/147 175; C21D8/12 B

According to International Patent Classification (IPC) or to both national classification and IPC

**B. FIELDS SEARCHED**

Minimum documentation searched (classification system followed by classification symbols)

C22C38/00; C21D8/12; C22C38/60; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2021-183722 A (JFE STEEL CORPORATION) 02 December 2021 (2021-12-02) | 1 |
| A | JP 2021-181604 A (JFE STEEL CORPORATION) 25 November 2021 (2021-11-25) | 1 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 August 2024** | **03 September 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
**Information on patent family members**

International application No.

**PCT/JP2024/023281**

| Patent document cited in search report | | | Publication date (day/month/year) | Patent family member(s) | Publication date (day/month/year) |
|---|---|---|---|---|---|
| JP | 2021-183722 | A | 02 December 2021 | (Family: none) | |
| JP | 2021-181604 | A | 25 November 2021 | (Family: none) | |

Form PCT/ISA/210 (patent family annex) (July 2022)

**EP 4 737 605 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023106556 A
- JP 2007169762 A
- WO 2012014290 A
- JP 2022161269 A